# EUROPEAN PATENT SPECIFICATION

(11) **EP 2 975 806 B1**
(45) Date of publication and mention of the grant of the patent: **14.03.2018**
(21) Application number: 15176756.3
(22) Date of filing: 15.07.2015
(51) Int. Cl.: H04L 12/58

(54) **INFORMATION SHARING SYSTEM, SERVER, SERVER PROGRAM AND INFORMATION SHARING METHOD**
INFORMATIONSTEILUNGSSYSTEM, -SERVER, -SERVERPROGRAMM UND INFORMATIONSTEILUNGSVERFAHREN
SYSTÈME DE PARTAGE D'INFORMATIONS, SERVEUR, PROGRAMME DE SERVEUR ET PROCÉDÉ DE PARTAGE D'INFORMATIONS

(30) Priority: 17.07.2014 JP 2014147164
(43) Date of publication of application: 20.01.2016
(73) Proprietor: Nintendo Co., Ltd., Kyoto, 601-8501 (JP); Monolith Software Inc., Meguro-ku Tokyo 153-0051 (JP)
(72) Inventor: Yokota, Genki, Kyoto 601-8501 (JP); Kojima, Koh, Tokyo 153-0051 (JP)
(74) Representative: Karl, Christof

(56) References cited:
- US-A1- 2007 266 097
- US-A1- 2010 216 553
- US-A1- 2013 324 234
- US-A1- 2014 013 247
- US-B1- 7 203 704

## Description

### FIELD

The present invention relates to an information sharing system, a server, a server program and an information sharing method, which allow a plurality of users to share information posted by a user.

### BACKGROUND AND SUMMARY

In recent years, the communication speed of wired and wireless networks has been increased, and this realizes a game, in which a plurality of users who use terminal devices such as a game device or a personal computer participate, i.e., a so-called online game, a network game or the like through communication between a terminal device and a server. In such a game, a function to exchange a message between a plurality of users who cooperate to play a game, for example, is often provided. (See Japanese Patent Application Laid-Open No. 2008-142423, for example.)

A message exchange function provided by a conventional online game enables sharing of a message only between users who play the game.

US 2013/324234 A1 (Hisashi Nogami et al.,) 5 Dec 2013 discloses an information processing device including: a selection unit that selects at least one content from a plurality of contents using user information sets of a plurality of users constituting a predetermined group, each user information set describing a user; and an execution unit that executes a process to notify at least one of the plurality of users included in the group of the content selected by the selection unit.

UPS 7 203 704 B1 (Douglas E. Stern et al.) 10 Apr 2007 discloses a GUI such as a web page having a hyperlink thereon is provided and that allows a user to contribute a post to a bulletin board or a thread dedicated to a particular topic of interest.

US 2010/216553 A1 (Martyn Richard Chudley et al.,) 26 Aug 2010 discloses a centralized social network tool configured to interface with and integrates into one or more videogames and/or videogame series.

US 2014/013247 A1 (Scott D. Beechuk et al.,) 9 Jan 2014 discloses methods, apparatus, systems, and computer-readable storage media for creating a customized user interface.

US 2007/266097 A1 (Ralph Harik et al.) 15 Nov 2007 discloses a method for automatically and efficiently propagating information using previously established social methods of communication (e.g., email, instant messaging (IM), social network message posting, and short message services).

An object of the present invention is to provide an information sharing system, a server, a server program and an information sharing method which are expected to improve the attraction of message sharing between a plurality of users.

The present invention attains the above objective by the independent claims 1, 15, 16 and 17. Preferred embodiments are described in the dependent claims 2 to 14. The reference numerals, step Nos. (a step is abbreviated as S and one the step Nos. are indicated), and the like in parenthesis indicate the correspondence with the embodiment described in order to aid in understanding the present invention.

The present invention is expected to improve the attraction of message sharing between a plurality of users.

The object and advantages of the invention will be realized and attained by means of the elements and combinations particularly pointed out in the claims. It is to be understood that both the foregoing general description and the following detailed description are exemplary and explanatory and are not restrictive of the invention.

The above and further objects, features, aspects and effects of the present technique will more fully be apparent from the following detailed description through collation with the accompanying drawings.

### BRIEF DESCRIPTION OF THE DRAWINGS

Figure 1 shows an example non-limiting schematic diagram for explaining an outline of an information processing system according to this embodiment.
Figure 2 shows an example non-limiting block diagram for illustrating the configuration of a game machine.
Figure 3 shows an example non-limiting block diagram for illustrating the configuration of a game server.
Figure 4 shows an example non-limiting block diagram for illustrating the configuration of an SNS server.
Figure 5 shows an example non-limiting schematic diagram for illustrating an example of a game screen.
Figure 6 shows an example non-limiting schematic diagram for illustrating an example of a message input screen.
Figure 7 shows an example non-limiting schematic diagram for explaining accumulation and display of a message by a game machine.
Figure 8 shows an example non-limiting schematic diagram for illustrating an example of a message display setting screen.
Figure 9 shows an example non-limiting schematic diagram for explaining display of a high evaluation message.
Figure 10 shows an example non-limiting flowchart for illustrating the procedures of message post processing to be performed by a game machine.
Figure 11 shows an example non-limiting flowchart for illustrating the procedures of message post processing to be performed by a game server.
Figure 12 shows an example non-limiting flowchart for illustrating the procedures of message display processing to be performed by a game machine.
Figure 13 shows an example non-limiting flowchart for illustrating the procedures of processing involved in message evaluation to be performed by a game machine.
Figure 14 shows an example non-limiting flowchart for illustrating the procedures of processing involved in message evaluation to be performed by a game server.
Figure 15 shows an example non-limiting flowchart for illustrating the procedures of evaluation right management processing to be performed by a game server.
Figure 16 shows an example non-limiting flowchart for illustrating the procedures of processing to be performed by an SNS server.

### DETAILED DESCRIPTION OF NON-LIMITING EXAMPLE EMBODIMENTS

### <System Outline>

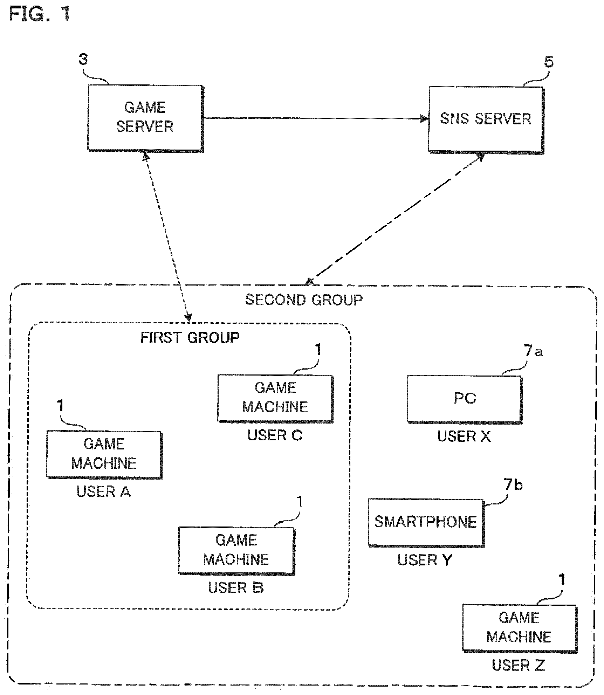

Figure 1 shows an example non-limiting schematic diagram for explaining an outline of an information processing system according to this embodiment. In an information processing system according to this embodiment, a plurality of game machines 1 and a game server 3 communicate with each other via a wired or wireless network. An information processing system is a game system which allows a plurality of users to play a common game by cooperating each other, fighting each other or the like. An information processing system according to this embodiment is a game system for realizing a so-called online game.

With an information processing system according to this embodiment, a user who participates in a game can create a message at a game machine 1 and post the message to the game server 3. The game server 3 transmits the posted message to a plurality of other users who participate in the game. This realizes sharing of a message between users. It is to be noted that a method to allow users to share a message is not limited to the method wherein the game server 3 transmits the message to the game machines 1. A message is made possible to be shared by a method wherein the game server 3 releases the message and the game machines 1 access the game server 3 to browse the message, for example. A message is made possible to be shared at least in a state where a plurality of users can use common information. A message can include not only text information but also information such as voice, a moving image, or a static image like an illustration or a handwritten character, for example.

The game server 3 in this embodiment manages a plurality of users as one group on the basis of user IDs attached to the respective users. The game server 3 manages a plurality of users who use this game system using game machines 1 to communicate with the game server 3, i.e., a plurality of users in an online state. In Figure 1, the group is illustrated as a first group surrounded by broken lines. In this example, three users A to C are handled as one group. Although one first group is illustrated in Figure 1, a plurality of first groups may exist. The game server 3 transmits a posted message to game machines 1 used by users who belong to the group so that the message is shared in the group. It is to be noted that, when a plurality of first groups exist, the plurality of first groups may be managed by one game server 3 or by a plurality of servers.

An information processing system according to this embodiment is provided with a function to automatically post a message to the SNS (Social Networking Service) when the message shared in a first group satisfies a predetermined condition. The game server 3 determines whether a message shared in a first group satisfies the predetermined condition or not. The game server 3 transmits a message, which satisfies the predetermined condition, to an SNS server 5.

The SNS server 5 accepts posting of a message from terminal devices, which is used by a registered user, such as a game machine 1, a PC (Personal Computer) 7a and a smartphone 7b. The SNS server 5 performs processing to distribute or release a posted message so that other users can browse the message. A message to be distributed or released by the SNS server 5 can be browsed by users A to C and X to Z in a second group surrounded by alternate long and short dash lines in Figure 1 utilizing not only a game machine 1 but also various terminal devices such as the PC 7a and the smartphone 7b. The SNS server 5 also distributes or releases a message posted from the game server 3 so that users in the second group can browse the message.

In this embodiment, the second group includes the first group. That is, users included in the first group are necessarily included in the second group (users A to C in Figure 1). A user may exist who belongs only to the second group and does not belong to the first group (users X to Z in Figure 1). A user who belongs to the first group can access both of the game server 3 and the SNS server 5 utilizing a game machine 1. When utilizing a terminal device other than the game machine 1, a user can access the SNS server 5 but cannot access the game server 3.

It is to be noted that the condition related to groups described above is only exemplary and not restrictive. For example, a system may be constructed so that a user may exist who belongs to the first group but does not belong to the second group. For another example, a system may be constructed so that a user can access the game server 3 utilizing a terminal device other than a game machine 1. For yet another example, a system may be constructed so that access to the SNS server 5 is also limited to access utilizing a game machine 1.

### <System Configuration>

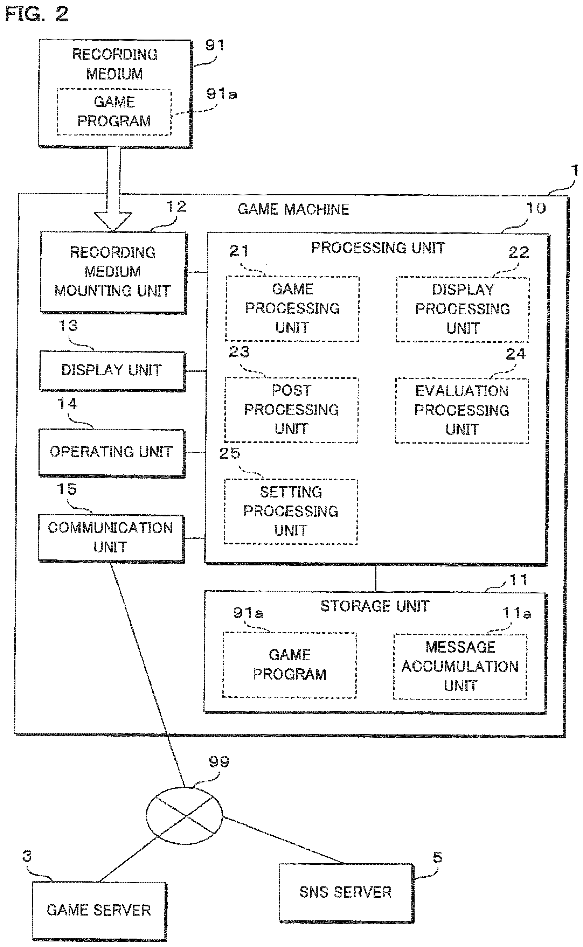

Figure 2 shows an example non-limiting block diagram for illustrating the configuration of a game machine 1. Each game machine 1 according to this embodiment is provided with a processing unit (processor) 10, a storage unit 11, a recording medium mounting unit 12, a display unit 13, an operating unit 14, a communication unit 15 and the like. The processing unit 10 of the game machine 1 is constituted of an arithmetic processing device such as a CPU (Central Processing Unit). The processing unit 10 reads out and executes a game program 91a recorded in a recording medium 91 mounted on the recording medium mounting unit 12 or a game program 91a stored in the storage unit 11. Execution of the game program 91a causes the processing unit 10 to perform various information processing involved in an online game.

The storage unit 11 is constituted of a semiconductor memory element, a hard disk drive or the like. The storage unit 11 stores various programs such as the game program 91a, and data to be used for execution of the programs. The storage unit 11 is provided with a message accumulation unit 11a which temporarily accumulates messages from other users received from the game server 3. The recording medium mounting unit 12 is constructed to make it possible to attach and detach a recording medium 91 of card type, cassette type, disk type or the like. The processing unit 10 can read out the game program 91a and various data from the recording medium 91 mounted on the recording medium mounting unit 12. The game machine 1 may be constructed to allow the processing unit 10 to write a program, data or the like in the recording medium 91.

The display unit 13 is constituted of a liquid crystal panel or the like, and displays an image given from the processing unit 10. The operating unit 14 is a push-down type button or a touch panel disposed at the display unit 13, for example. The operating unit 14 gives a signal corresponding to the content of operation performed by the user to the processing unit 10. The content of operation is pushing down, releasing or the like of a button, for example. The communication unit 15 transmits and receives information to and from the game server 3, the SNS server 5, another game machine 1 or the like via a network 99 such as the Internet, for example. The game machine 1 can communicate with the server at the communication unit 15 so as to download the game program 91a or the like and store the game program 91a or the like in the storage unit 11, for example.

Regarding a game machine 1 according to this embodiment, the processing unit 10 executes the game program 91a, so that a game processing unit 21, a display processing unit 22, a post processing unit 23, an evaluation processing unit 24, a setting processing unit 25 and the like are realized by the processing unit 10 as software functional blocks. The game processing unit 21 performs various determination processing, event processing or the like involved in a game in response to operation or the like by the user accepted at the operating unit 14. The display processing unit 22 generates a game screen corresponding to the processing result of the game processing unit 21 and gives the game screen to the display unit 13, so as to perform processing to display the game screen at the display unit 13. The display processing unit 22 performs processing to display a message, which is received from the game server 3, at the display unit 13.

The post processing unit 23 performs: processing to accept input of a message by a user; processing to transmit the accepted message from the communication unit 15 to the game server 3; processing to receive a message by another user, which is transmitted from the game server 3, at the communication unit 15; and the like. The received message by another user is accumulated in the message accumulation unit 11a of the storage unit 11. The accumulated message is displayed at the display unit 13 by the display processing unit 22.

The evaluation processing unit 24 performs processing to accept evaluation to a message received from the game server 3 while the message is displayed at the display unit 13 by the display processing unit 22. The evaluation processing unit 24 accepts a specific action (operating action) made by a user utilizing the operating unit 14, so as to accept an evaluation. When accepting an evaluation to a message, the evaluation processing unit 24 performs processing to transmit a fact that an evaluation has been accepted, the content of the evaluation or the like as evaluation information to the game server 3.

The setting processing unit 25 performs processing to accept various settings related to message display and store the settings in the storage unit 11. The setting processing unit 25 accepts setting of the number of messages to be displayed or a display interval, for example. The setting processing unit 25 accepts setting related to a user who rejects display of a message. The display processing unit 22 reads out setting, which is accepted at the setting processing unit 25, from the storage unit 11, and displays a message by reflecting the setting.

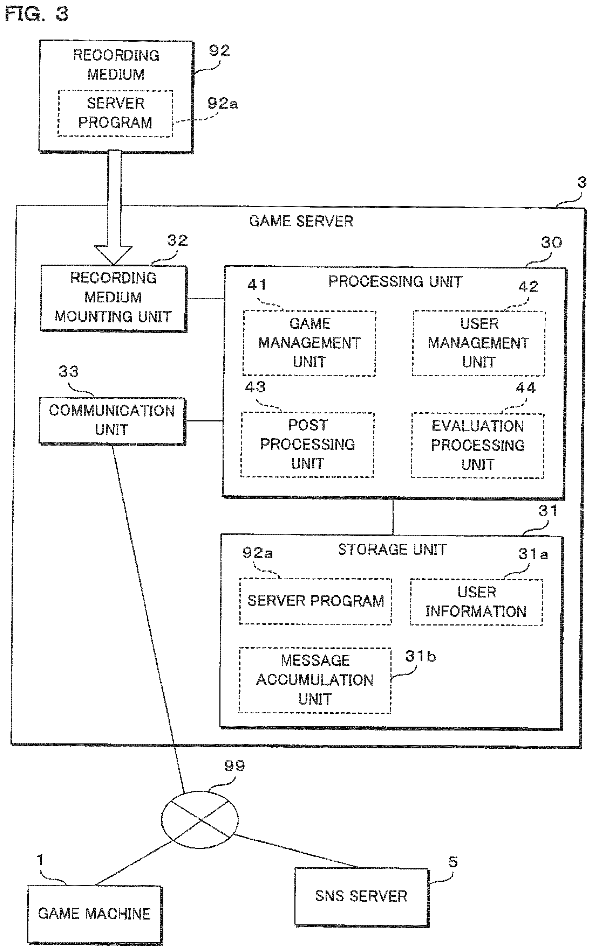

Figure 3 shows an example non-limiting block diagram for illustrating the configuration of the game server 3. The game server 3 according to this embodiment is provided with a processing unit 30, a storage unit 31, a recording medium mounting unit 32, a communication unit 33 and the like. The processing unit 30 is constituted of an arithmetic processing device such as a CPU. The processing unit 30 reads out and executes a server program 92a stored in the storage unit 31 so as to perform various processing involved in an online game. The storage unit 31 is constituted of a nonvolatile storage device. The storage unit 31 can store a program such as the server program 92a, and various data. The storage unit 31 in this embodiment stores information related to users, who participate in an online game, as user information 31a. The storage unit 31 is provided with a message accumulation unit 31b for accumulating a message received from a game machine 1.

The recording medium mounting unit 32 is constructed to make it possible to attach and detach a recording medium 92 of disk type or the like. The processing unit 30 can read out a server program 92a and various other data from the recording medium 92 mounted on the recording medium mounting unit 32 so as to install the server program 92a and various other data in the storage unit 31. The communication unit 33 transmits and receives data to and from a game machine 1, the SNS server 5 or the like via the network 99 such as the Internet.

Regarding the game server 3 according to this embodiment, the processing unit 30 executes the server program 92a, so that a game management unit 41, a user management unit 42, a post processing unit 43, an evaluation processing unit 44 and the like are realized as software functional blocks. The game management unit 41 performs management of game progress situation, management of data shared by a plurality of users, or the like for an online game which is played by a plurality of participating users utilizing a plurality of game machines 1. The game management unit 41 acquires information on operation related to a game performed at each game machine 1 or change of an object such as a character in a game corresponding to the operation, for example. The game management unit 41 performs processing to transmit the acquired information to other game machines 1 with which a common game is being played, for example.

The user management unit 42 manages various kinds of information related to users who participate in an online game. The user management unit 42 stores and manages various information in the user information 31a of the storage unit 31 in association with each user ID of a user who can participate in an online game. Information to be stored can be information related to a password, a character to be used in a game, game progress situation, or information on the amount of possessed virtual currency to be used in a game, for example. It is to be noted that, although this embodiment employs a structure wherein the game server 3 manages the user information, the example embodiment may employ a structure wherein a part or whole of the user information is stored and managed in the game machines 1. The example embodiment may also employ a structure wherein each game machine 1 stores a password and the game server 3 stores the game progress situation and the amount of possessed virtual currency.

In a game according to this embodiment, a plurality of predetermined users are handled as one team. The user management unit 42 manages which team the respective users belong to. It is to be noted that a team managed by the user management unit 42 corresponds to the first group illustrated in Figure 1.

The post processing unit 43 performs processing to receive a message transmitted by a game machine 1 so as to accept posting of a message by a user. The post processing unit 43 accumulates the accepted message in the message accumulation unit 31b of the storage unit 31. The post processing unit 43 performs processing to distribute the accepted posted message to other users in a team to which the poster of the message belongs. The post processing unit 43 retrieves users, which belong to the same team as the poster of the message, from the user information 31a of the storage unit 31, and transmits the message to game machines 1 used by the retrieved users.

The evaluation processing unit 44 performs processing to receive evaluation information transmitted from a game machine 1 when a message distributed to the game machine 1 is evaluated by a user. The evaluation processing unit 44 stores and totals the amount of evaluations made by users, the content and the like for each message accumulated in the message accumulation unit 31b. The evaluation processing unit 44 transmits a message having an evaluation amount or the like that satisfies a predetermined condition not only to users in a team to which the user who has created the message belongs but also to users in all teams who participate in the game. The evaluation processing unit 44 performs processing to post a message, which satisfies a predetermined condition, to the SNS server 5.

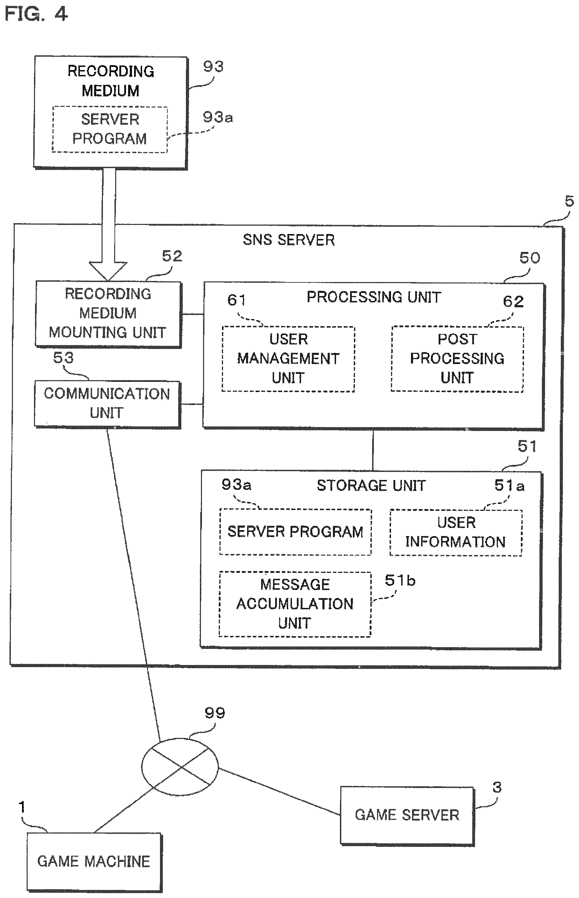

Figure 4 shows an example non-limiting block diagram for illustrating the configuration of the SNS server 5. The SNS server 5 according to this embodiment is provided with a processing unit 50, a storage unit 51, a recording medium mounting unit 52, a communication unit 53 and the like. The processing unit 50 is constituted of an arithmetic processing device such as a CPU. The processing unit 50 reads out and executes a server program 93a stored in the storage unit 51 so as to perform various processing related to the SNS. The storage unit 51 is constituted of a nonvolatile storage device and can store a program such as the server program 93a, and various data. The storage unit 51 in this embodiment stores information related to users, who use the SNS, as user information 51a. The storage unit 51 is provided with a message accumulation unit 51b for accumulating a message received from a game machine 1, the game server 3 or another information processing device.

The recording medium mounting unit 52 is constructed to make it possible to attach and detach a recording medium 93 of disk type or the like. The processing unit 50 can read out a server program 93a and various other data from the recording medium 93 mounted on the recording medium mounting unit 52 so as to install the server program 93a and various other data in the storage unit 51. The communication unit 53 transmits and receives data to and from a game machine 1, the game server 3 or the like via the network 99 such as the Internet.

Regarding the SNS server 5 according to this embodiment, the processing unit 50 executes the server program 93a, so that a user management unit 61, a post processing unit 62 and the like are realized as software functional blocks. The user management unit 61 manages various kinds of information related to users who use the SNS. The user management unit 61 stores and manages information on a password, the gender, the age or post history, for example, in the user information 51a of the storage unit 51 in association with each user ID. It is to be noted that all users who are managed by the SNS server 5 correspond to the second group illustrated in Figure 1.

The post processing unit 62 performs processing to receive a message from a game machine 1 or another information processing unit so as to accept posting of a message by a user. The post processing unit 62 accumulates the accepted message in the message accumulation unit 51b of the storage unit 51. The post processing unit 62 performs processing to distribute or release the accepted posted message. For example, the post processing unit 62 may release a message in a form of a bulletin board or a blog and transmit the released message in response to a request from a game machine 1 or another information processing device. For another example, the post processing unit 62 may transmit a posted message to all users or some users.

### <Message Display in Game>

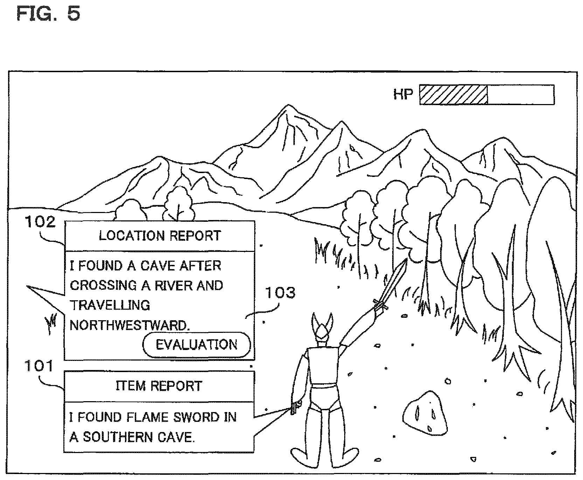

Next, an example of an online game to be realized at a game machine 1 according to this embodiment will be explained. The content of a game explained herein is only exemplary, and the example embodiment can be applied to various other games. Figure 5 shows an example non-limiting schematic diagram for illustrating an example of a game screen. An online game according to this embodiment is a game wherein characters operated by the respective users cooperate to explore a world represented as a three-dimensional virtual space. The game processing unit 21 of the game machine 1 creates a three-dimensional virtual space, which is composed of polygons, textures and the like, on the basis of the game program 91a together with data, which is stored in the storage unit 11 or the recording medium 91, or data, which is received from the game server 3. The game processing unit 21 arranges: a player character, which is operated by a user; another NPC (Non Player Character); the background; and objects such as structures, which are composed of polygons, textures and the like, in the created three-dimensional virtual space.

The display processing unit 22 of the game machine 1 creates a two-dimensional image, which is to be obtained by photographing the three-dimensional virtual space, which is created by the game processing unit 21, with a virtual camera located suitably in the virtual space. The display processing unit 22 outputs the created two-dimensional image as an image signal suitable for display by the display unit 13, so as to display a game screen at the display unit 13. The game screen shown in Figure 5 illustrates a three-dimensional virtual space photographed by a virtual camera from behind a player character. The game processing unit 21 manages status information or the like of a player character. The display processing unit 22 acquires the status information from the game processing unit 21, and displays the status information in an upper right side area of the game screen.

In this embodiment, users who participate in an online game respectively belong to a team composed of approximately 10 to 30 users, for example. Which team each user belongs to may be decided based on user's intention or based on random numbers or the like. Which team each user belongs to is managed by the user management unit 42 of the game server 3. For example, the user management unit 42 manages a team by storing a user ID in association with a team ID in the user information 31a of the storage unit 31. It is to be noted that users who belong to a team are not necessarily fixed. For example, the game server 3 may select a team, to which a user belongs, randomly every time the user plays an online game.

In an online game according to this embodiment, the respective users explore a world of a three-dimensional virtual space, and report the result to other users who belong to the same team. This allows a plurality of users to cooperate to explore a common world in an online game. A user who uses a game machine 1 to play an online game can input a message at arbitrary timing during the game. The post processing unit 23 of the game machine 1 accepts input of a message by a user, and transmits the accepted message to the game server 3. The message, input of which is accepted by the post processing unit 23, is displayed at the display unit 13 by the display processing unit 22. The post processing unit 43 of the game server 3 accumulates the message, which is received from the game machine 1, in the message accumulation unit 31b of the storage unit 31. The post processing unit 43 transmits the message to other users in a team, to which the poster of the received message belongs. When receiving a message by another user from the game server 3, a game machine 1 displays the message at the display unit 13.

In the example illustrated in Figure 5, text of messages reported between users are displayed in the form of description in balloons 101 and 102 in a lower left side area of the game screen. In this example, regarding the two balloons 101 and 102 displayed and arranged vertically, the lower balloon 101 is for a message by the user himself while the upper balloon 102 is for a message by another user. Whether each balloon 101 or 102 is for a message by the user himself or for a message by another user can be judged based on the orientation of the balloon 101 or 102 being displayed. It is to be noted that whether a balloon is for a message by the user himself or for a message by another user may be distinguished not based on the orientation of the balloon 101 or 102 but based on the color, the shape or the like of the balloon 101 or 102, for example.

In this embodiment, each message is constituted of combination of the theme of the message, which can be selected by the user, and message text, in which the user can input arbitrary information. The message by another user illustrated in Figure 5 includes a theme of "Location Report" and message text of "I found a cave after crossing a river and travelling northwestward". A message by the user himself includes a theme of "Item Report" and message text of "I found Flame Sword in a southern cave". A message by another user is provided with an evaluation button 103 in the balloon 102. The evaluation button 103 will be described later.

In this embodiment, a message by another user, which is received from the game server 3, is displayed in a game screen so that it is impossible to distinguish which user has created and posted the message. A message by another user is displayed so that it is impossible to distinguish from which game machine 1 the message has been transmitted. That is, only the theme and message text are displayed as a message by another user, and identification information such as a nickname or the user ID of a user who has posted the message and identification information such as the ID attached to a game machine which has been used for posting are not displayed. Here, identification information is information attached uniquely to a user or a game machine 1, so that the game server 3 can uniquely identify a user or a game machine 1 on the basis of the information. Identification information may be information constituted of combination of numbers, characters or the like, for example, or may be any information with which a user or a game machine 1 can be identified. Also, identification information such as a nickname or the user ID of the user is not displayed for a message created by the user himself. However, the user can distinguish that a displayed balloon 101 is for his own message on the basis of the orientation of the balloon 101.

For example, the game server 3 receives a message from a game machine 1 and transmits the message to another game machine 1 without attaching information with which a user who has posted the message can be distinguished. For another example, the game server 3 transmits a message after attaching the user ID or the like, though the game machine 1 which receives the message displays the message without displaying the user ID or the like. These can realize message display having high anonymity as described above.

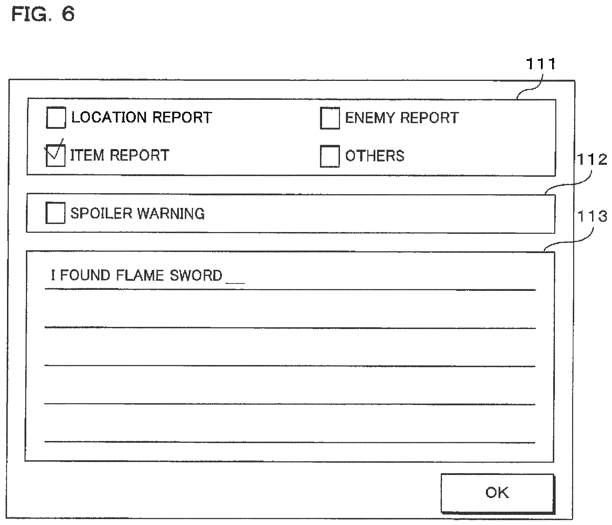

Figure 6 shows an example non-limiting schematic diagram for illustrating an example of a message input screen. Regarding a game machine 1 according to this embodiment, the user performs predetermined operation to the operating unit 14 in a state where a game screen is displayed at the display unit 13, so that it becomes possible to input a message. The predetermined operation may be pushing down of a specific button disposed at the operating unit 14, for example. The predetermined operation may be operation such as clicking or touching to an icon displayed in a game screen, for another example. The predetermined operation may be another operation. When accepting the predetermined operation at the operating unit 14, the post processing unit 23 of the game machine 1 causes the display processing unit 22 to display a message input screen. The message input screen illustrated in Figure 6 is provided with a theme selection section 111, a spoiler warning selection section 112 and a message text input section 113.

A plurality of themes of messages which can be selected by a user are displayed at the theme selection section 111 of the message input screen. In the example illustrated in Figure 6, four themes of "Location Report", "Item Report", "Enemy Report" and "Others" are displayed. Each theme is provided with a checkbox. The user can select the theme of a message by checking any one of the four checkboxes.

The spoiler warning selection section 112 of the message input screen is for selecting whether a flag for spoiler warning is to be attached to a message to be posted or not using a checkbox. A flag for spoiler warning allows the poster of a message to declare that the message can reveal an important point such as the story of the game. As a message to which a flag for spoiler warning is attached, the theme of the message is displayed in the balloon 102 and text of "Spoiler Warning" is displayed instead of message text inputted by the user, for example. Regarding a message displayed as "Spoiler Warning", the original message text is displayed when the user of the game machine 1 performs operation such as clicking or touching to the balloon 102, for example.

At the message text input section 113 of the message input screen, the user can freely input text information. Here, a limit may be put on the number of characters or the like. Although this embodiment employs a structure wherein text information is inputted as a message, the example embodiment may employ a structure wherein a handwritten image, a photographed image or an image obtained by capturing a game screen, for example, can be posted as a message. It is to be noted that the game machine 1 may display a software keyboard together with the message input screen so as to accept input of text information when the game machine 1 is not provided with an input device such as a keyboard as the operating unit 14. The user may preliminarily register one or more text information, and the game machine 1 may accept selection of registered text information at the message input screen and transmit the selected text information as a message.

When finishing input of a message, the user can post the message to the game server 3 by performing operation to an "OK" button disposed in the message input screen. The post processing unit 23 of the game machine 1 attaches a spoiler flag to the theme and the message text, which are inputted at the message input screen, as needed, and transmits the theme and the message text to the game server 3. At this time, the post processing unit 23 transmits the message to the game server 3 after attaching the user ID or the like of the poster to the message. When the game server 3 receives the message from the game machine 1, the post processing unit 43 of the game server 3 accumulates the received message in the message accumulation unit 31b of the storage unit 31. The post processing unit 43 distributes the received message to game machines 1 used by other users in the team to which the poster of the message belongs.

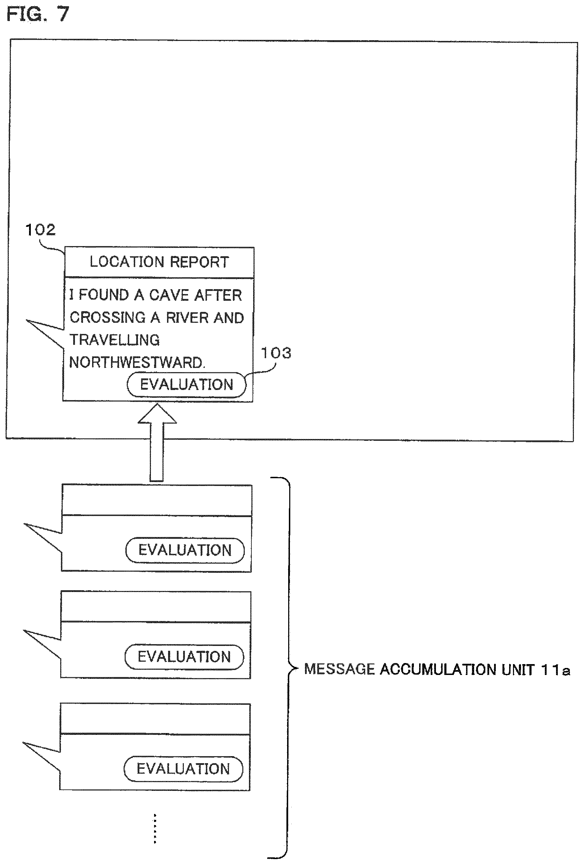

When a game machine 1 receives the message distributed by the game server 3, the post processing unit 23 of the game machine 1 accumulates the received message in the message accumulation unit 11a of the storage unit 11. Figure 7 shows an example non-limiting schematic diagram for explaining accumulation and display of a message by the game machine 1. In this embodiment, the display processing unit 22 of the game machine 1 displays only one message by another user in the game screen. The post processing unit 23 accumulates messages, which are received from the game server 3, in the message accumulation unit 11a so that the receiving order can be distinguished. The display processing unit 22 sequentially reads out the messages in the order of accumulation in the message accumulation unit 11a, and displays the messages one by one in the game screen. The display processing unit 22 reads out one message from the message accumulation unit 11a and displays the message, hides the displayed message after a predetermined time period such as 30 seconds elapses, reads out an undisplayed message of the earliest receiving order from the message accumulation unit 11a, and displays the message in the game screen. A message, display of which is finished, may be discarded from the message accumulation unit 11a.

The game machine 1 in this embodiment does not simultaneously display a plurality of messages by other users. The game machine 1 can simultaneously display a message by another user and a message which the user himself creates. The game machine 1 does not simultaneously display a plurality of messages which the user himself creates.

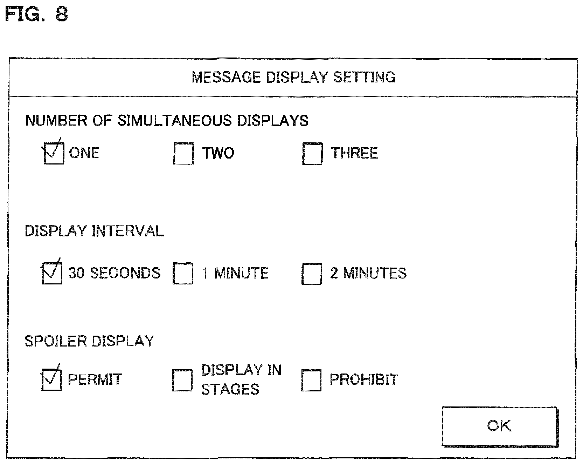

Here, the above rule related to message display is a default setting of this game. Each user can change the setting according to his preference. For example, the user can cause the display unit 13 to display a menu screen or the like by performing predetermined operation to the operating unit 14 while he is playing a game utilizing a game machine 1. The user can cause a message display setting screen to be displayed by selecting an item of display setting from the menu screen. Figure 8 shows an example non-limiting schematic diagram for illustrating an example of a message display setting screen.

When an item of display setting is selected at the menu screen, the setting processing unit 25 of the game machine 1 causes the display processing unit 22 to display a message display setting screen. At the message display setting screen of this example, three items of "Number of Simultaneous Displays", "Display Interval" and "Spoiler Display" can be set. For each setting item, one of a plurality of choices can be selected by checking a checkbox.

The setting item of "Number of Simultaneous Displays" is an item for setting the number of messages by other users to be simultaneously displayed in the game screen. As "Number of Simultaneous Displays", one, two or three can be set, and one is selected in the default setting. The setting item of "Display Interval" is an item for setting the time period from display to hiding of a message, or time period from display of one message to display of the next message. As "Display Interval", 30 seconds, 1 minute or 2 minutes may be set, for example, and 30 seconds is selected in the default setting. When "Number of Simultaneous Displays" is set as one and "Display Interval" is set as 1 minute, for example, the display processing unit 22 of the game machine 1 reads out a message from the message accumulation unit 11a at every 1 minute, and sequentially displays read messages.

When "Number of Simultaneous Displays" is set as two and "Display Interval" is set as 2 minutes, for another example, the display processing unit 22 reads out two messages from the message accumulation unit 11a at every 2 minutes, and simultaneously displays the two read messages. When four messages A to D are accumulated in the message accumulation unit 11a, the display processing unit 22 first displays messages A and B, and displays messages C and D 2 minutes later. In such a case, the display processing unit 22 may display a message A, display messages A and B 2 minutes later, display messages B and C 2 minutes further later, and display messages C and D 2 minutes further later. That is, the display processing unit 22 may be constructed to update messages to be displayed one by one even when "Number of Simultaneous Displays" is two.

The setting item of "Spoiler Display" is an item for setting whether display of a message to which a flag for spoiler warning is attached is to be permitted, displayed in stages, or prohibited. When display of spoiler is set to be permitted, the display processing unit 22 displays a message to which a flag for spoiler warning is attached in a manner similar to a message to which a flag is not attached. When spoiler display is set to be display in stages, the display processing unit 22 displays "Spoiler Warning" as message text as described above and displays a message in stages. When spoiler display is set to be prohibited, the display processing unit 22 does not display any message to which a flag for spoiler warning is attached.

When operation is performed to an "OK" button disposed in the message display setting screen, the setting processing unit 25 of the game machine 1 accepts input of each setting item. The setting processing unit 25 stores the accepted setting as setting information in the storage unit 11. In the process of message display in the game screen, the display processing unit 22 refers to the setting information stored in the storage unit 22, and performs display according to conditions set in the respective items.

In this embodiment, regarding a message by another user distributed from the game server 3, it is possible to set rejection of message display at a game machine 1. For example, a user playing an online game at the game machine 1 can set rejection of message display by specifying a message and performing predetermined rejection operation when the message by another user is displayed in the game screen. When the predetermined rejection operation is performed, the setting processing unit 25 of the game machine 1 performs processing to register a user, who has posted the specified message, in a rejection list. Thereafter, the game machine 1 does not display a message posted by the user registered in the rejection list. It is to be noted that the rejection list may be managed by each game machine 1 or by the game server 3.

In a structure wherein the game server 3 manages the rejection list, the setting processing unit 25 of the game machine 1 which accepts rejection operation notifies the game server 3 of the fact. At this time, the setting processing unit 25 notifies the game server 3 of information such as the message ID, with which a rejected message can be identified, or information such as the user ID, with which a user who has posted the message can be identified. The user management unit 42 of the game server 3 stores a rejection list, in which each user is associated with the user ID or the like of another user display of whose message is to be rejected, in the storage unit 31. When notification of display rejection is given from the game machine 1, the user management unit 42 specifies a user display of whose message is to be rejected on the basis of the notification, and adds the user ID of the specified user to the rejection list. The post processing unit 43 of the game server 3 refers to the rejection list in the process of transmitting a posted message, and does not transmit the message to a user who rejects display of the message.

In a structure wherein each game machine 1 manages a rejection list, information such as the user ID with which a poster of the message can be identified is required to be attached to a message to be distributed from the game server 3 to the game machine 1. The game machine 1 specifies a user who has posted the rejected message, and stores the user ID of the specified user as a rejection list in the storage unit 11. The display processing unit 22 of the game machine 1 refers to the rejection list in the process of displaying a message received from the game server 3, and does not display the message when the message has been posted from a user registered in the rejection list. Alternatively, the post processing unit 23 of the game machine 1 refers to the rejection list when receiving a message from the game server 3, and discards the message without accumulating the message in the message accumulation unit 11a when the message has been posted by a user registered in the rejection list.

As described above, a message by another user to be displayed in a game screen by a game machine 1 according to this embodiment does not include information with which the poster of the message can be identified. Therefore, the user is not required to perform rejection operation by specifying a user but required to perform rejection operation to a message for rejecting display of a message. When accepting rejection operation, the game machine 1 may notify the user of who the poster of the specified message is and may also accept cancelling of the rejection operation in this process.

### <Evaluation to Message>

In an information processing system according to this embodiment, the user of a game machine 1 can evaluate a message transmitted from the game server 3 to the game machine 1. As illustrated in Figure 5, an evaluation button 103 is disposed in the balloon 102 for a message by another user to be displayed in a game screen at the game machine 1. The user of the game machine 1 browses the displayed message by another user, and can give an evaluation (good evaluation) to the message by performing operation to the evaluation button 103 when judging that the message is useful information or the like. The operation to the evaluation button 103 may be operation such as clicking or touching the evaluation button 103, for example. The example embodiment can employ a structure wherein evaluation to a message is accepted by performing operation to a specific button disposed at the operating unit 14 of the game machine 1 without utilizing the evaluation button 103.

When accepting operation to the evaluation button 103, the evaluation processing unit 24 of the game machine 1 notifies the game server 3 of the fact that the message has been evaluated together with information to be used for identifying the evaluated message. The evaluation processing unit 44 of the game server 3 totals and manages the number of evaluations by users to each posted message. When notification that a message has been evaluated is given from a game machine 1, the evaluation processing unit 44 of the game server 3 increases the number of evaluations to the message involved in the notification. The evaluation processing unit 44 determines whether the number of evaluations for each message satisfies a predetermined condition or not.

The evaluation processing unit 44 of this embodiment uses the following two conditions as the predetermined condition for determination.
(Condition 1) The number of evaluations for the message is no less than 5, when the number of users who belong to the team is no less than 15.
(Condition 2) The number of evaluations for the message is no less than 1/3 of the number of users, when the number of users who belong to the team is less than 15.

The above Condition 1 is a condition set based on a fixed number, while the above Condition 2 is a condition set based on a ratio. The evaluation processing unit 44 makes determination using any one of the above two conditions according to the number of users in a team to which the poster of the message belongs. That is, the evaluation processing unit 44 changes the condition for determination according to the number of users who belong to the team. It is to be noted that the numerical value described in the above conditions is only exemplary and not restrictive. The predetermined condition can be changed at the game server 3 and, for example, an operating company of an online game or the like can set an arbitrary condition according to the number of users who participate in the online game or the like.

In this embodiment, when the evaluation processing unit 44 determines that the number of evaluations for a message satisfies the predetermined condition, the message is redistributed and displayed at game machines 1 of the respective users. A message having the number of evaluations which satisfies the predetermined condition will be hereinafter referred to as a high evaluation message. It is to be noted that "high evaluation" here means good evaluation or plus evaluation, and is not necessarily absolutely high evaluation. The evaluation processing unit 44 acquires a message, which has been determined as a high evaluation message, from the message accumulation unit 31b of the storage unit 31, and transmits the message to game machines 1. At this time, the evaluation processing unit 44 transmits the high evaluation message not only to users in the team in which the poster of the high evaluation message is included but also to users in other teams in an online game managed by the user management unit 42. The evaluation processing unit 44 transmits information such as the user ID, with which the poster of the high evaluation message can be identified, to each game machine 1 together with the high evaluation message.

It is to be noted that, although this embodiment employs a structure wherein the game server 3 distributes a high evaluation message to the game machines 1, this is no restrictive. For example, the example embodiment can employ a structure wherein the game server 3 or the SNS server 5 stores a high evaluation message and each game machine 1 accesses the game server 3 or the SNS server 5 at predetermined timing to acquire the high evaluation message. Each game machine 1 may acquire a high evaluation message at every 1 minute during a game, for example. Each game machine 1 may acquire a high evaluation message at timing such as startup of a game program, login to an online game or event end in a game, for example. Each game machine 1 may acquire a high evaluation message at other timing.

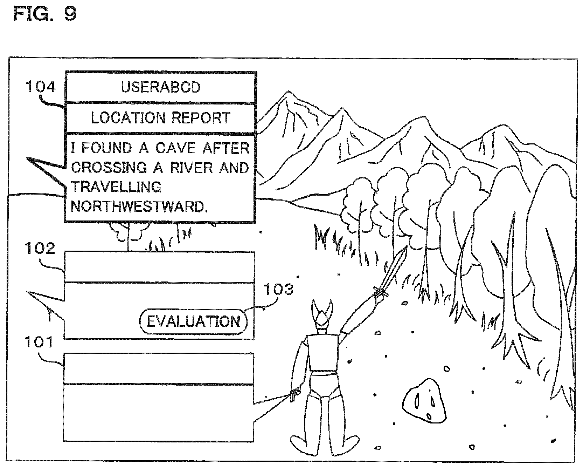

When a game machine 1 receives a high evaluation message from the game server deice 3, the display processing unit 22 of the game machine 1 performs processing to display the high evaluation message in a game screen. Figure 9 shows an example non-limiting schematic diagram for explaining display of a high evaluation message. The display processing unit 22 of the game machine 1 displays the high evaluation message in an upper left side area of the game screen utilizing a balloon 104. The balloon 104 for a high evaluation message is displayed in a more emphatic manner than other balloons 101 and 102. Although the balloon 104 in Figure 9 is drawn with bold lines to represent emphatic display, an emphatic display method is not limited to this. The balloon 104 is provided with an area where the user ID of the poster of the message is displayed, in addition to the areas where the theme and the message text of the message are displayed. A high evaluation message is displayed for a predetermined time period such as 1 minute, for example, and is hidden after elapse of the predetermined time period.

It is to be noted that, although this embodiment employs a structure wherein the display processing unit 22 displays the balloon 104 for a high evaluation message in an upper left side area of the game screen, i.e., a place different from the balloons 101 and 102 for normal messages, this is not restrictive. The display processing unit 22 may display the balloon 104 for a high evaluation message in a lower left side area of the game screen as with the balloons 101 and 102. In such a case, the display processing unit 22 can display the balloon 104 and the balloons 101 and 102 in a distinguishable manner by changing the shape, size or color of the balloons, for example.

Regarding messages by other users to be displayed using the balloon 102, a predetermined number of messages are sequentially displayed at a predetermined time interval according to settings by a user of the game machine 1. On the other hand, display of a high evaluation message using the balloon 104 is performed regardless of the above display order of messages by other users. When receiving a high evaluation message, the display processing unit 22 promptly displays the high evaluation message in the game screen using the balloon 104. When receiving a plurality of high evaluation messages simultaneously or successively, the display processing unit 22 of the game machine 1 may display the high evaluation messages simultaneously, or sequentially at a predetermined time interval.

When a structure wherein the balloon 104 for a high evaluation message is displayed at the same place in the game screen as the balloons 101 and 102 for normal messages is employed, the display processing unit 22 may display the balloon 104 of the received high evaluation message preferentially in an interruption manner regardless of the display order of other messages in response to receipt of the high evaluation message. Alternatively, the display processing unit 22 may display a high evaluation message in the receipt order as with other messages. In either case, the display processing unit 22 may provide a difference in the display time period according to the type of messages by, for example, displaying a high evaluation message for a longer time period than other messages.

A user who plays an online game at each game machine 1 can transmit a message to other users who belong to the same team during the game. A message created by each user at the game machine 1 is posted from the game machine 1 to the game server 3. When accepting posting of a message from a game machine 1, the game server 3 distributes the message to game machines 1 used by other users in the team to which the poster of the message belongs. When receiving a message by another user from the game server 3, the game machine 1 displays the message by another user in the game screen utilizing the balloon 102. The game machine 1 accepts good evaluation to the message at the evaluation button 103. When accepting evaluation, the game machine 1 notifies the game server 3. When the number of evaluation times satisfies the predetermined condition, the game server 3 distributes the message as a high evaluation message not only to the team to which the user who has posted the message belongs but also to other teams. The message distribution can realize message sharing not only between users in a team but also between users in a wider range. When receiving a high evaluation message from the game server 3, the game machine 1 displays the high evaluation message in an emphasized manner using the balloon 104. This makes it possible to distribute a message which has receives a high evaluation in a team to other teams.

In this embodiment, a limit is put on the number of times that each user can evaluate messages by other users. For example, right to evaluate messages by other users ten times is given first to each user. Every time each user performs evaluation operation to a message by another user displayed in the game screen utilizing the evaluation button 103, evaluation rights owned by each user decreases by one. Accordingly, each user can make an evaluation to a message by another user ten times. Evaluation rights of each user increase by one at every predetermined time period such as every one hour, for example. The upper limit of evaluation rights to be owned by each user is ten.

Management of such evaluation rights (management of the number of evaluation times) is performed by the user management unit 42 of the game server 3. The user management unit 42 stores the user ID of each user and the number of owned evaluation rights in association with each other in the user information 31a of the storage unit 31. When receiving notification that an evaluation has been made from a game machine 1, the user management unit 42 specifies a user who has made the evaluation, and decreases the number of evaluation rights owned by the user by one. The user management unit 42 increases the number of evaluation rights by one at every predetermined time period regarding a user whose number of evaluation rights has not reached the upper limit. Although this embodiment employs a structure wherein management of evaluation rights of each user is performed by the game server 3, this is not restrictive, and the example embodiment may employ a structure wherein each game machine 1 manages the evaluation rights of the user.

The number of evaluation rights may be increased not at every predetermined time period but when good results are gained in a game or when a specific item is found, for example. For another example, when an evaluation is made for a message or when a message is determined as a high evaluation message according to evaluations and shared by users in a second group, the number of evaluation rights for the user who has posted the message may be increased. Furthermore, the number of evaluation rights may be increased according to another condition.

### <Automatic Post to SNS>

An information processing system according to this embodiment is provided with a function to automatically post a message, to which high evaluation has been given, to the SNS. As described above, the evaluation processing unit 44 of the game server 3 manages the number of evaluations for posted messages. The evaluation processing unit 44 performs processing to post the message to the SNS server 5 when the number of evaluations satisfies a predetermined condition. The predetermined condition for automatic post to the SNS and the predetermined condition for distribution to the respective game machines 1 as a high evaluation message as described above may be the same condition or may be different conditions. In this embodiment, the same condition is employed. Regarding a message the number of evaluations to which satisfies the predetermined condition, the evaluation processing unit 44 of the game server 3 transmits the theme and the message text thereof and the user ID of the user who has posted the message to the SNS server 5.

The SNS server 5 performs processing to release a posted message in a manner that various information processing terminal devices can browse the message utilizing a browser of the Internet or the like. The SNS server 5 sorts messages posted by users for each theme, for example, and releases the messages in the form of an electronic bulletin board. Preliminary user registration is required for posting a message to the SNS server 5, while user registration is not required for only browsing messaged. The user management unit 61 of the SNS server 5 performs processing to accept user registration, and stores and manages information such as the ID and the password of the user in the user information 51a of the storage unit 51.

The post processing unit 62 of the SNS server 5 performs processing to accept posting of a message from a terminal device such as a game machine 1, the PC 7a or the smartphone 7b. The post processing unit 62 accepts message posting from the game server 3. When accepting posting of a message from any device, the post processing unit 62 of the SNS server 5 accumulates the received message in the message accumulation unit 51b of the storage unit 51 and releases the message.

The SNS server 5 is provided with a bulletin board where messages related to an online game provided by the game server 3 are collected. A message posted from the game server deice 3 is released at the bulletin board. Each user also can post a message directly to the bulletin board utilizing a game machine 1, the PC 7a, the smartphone 7b or the like. A message posted from the game server 3 and a message posted from each user may be released at different bulletin boards. A dedicated bulletin board may be employed which does not accept posting from the user but accepts posting from the game server 3.

A bulletin board for an online game according to this embodiment releases posted messages by further sorting the messages into four themes of "Location Report", "Item Report", "Enemy Report" and "Others". In response to a request from a terminal device such as a game machine 1, the PC 7a or the smartphone 7b, the SNS server 5 creates data to be displayed at a bulletin board, which includes posted messages, and transmits the data to the terminal device so as to release the message.

The user of the game machine 1 can display a message, which is released at a bulletin board, at the display unit 13 and browse the message by accessing the SNS server 5 utilizing the Internet browser function of the game machine 1. This makes it possible to share a message between a plurality of users managed by the SNS server 5. The Internet browser function may be incorporated in the game program 91a, so that a user who is playing an online game can access the SNS server 5 without interrupting the game.

### <Flowcharts>

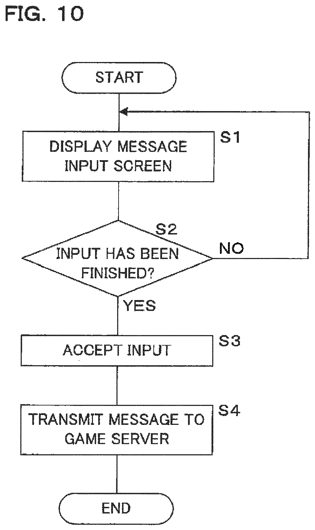

Next, processing to be performed in an information processing system according to this embodiment will be explained using flowcharts. Figure 10 shows an example non-limiting flowchart for illustrating the procedures of message post processing to be performed by a game machine 1. The post processing unit 23 of a game machine 1 according to this embodiment displays a message input screen at the display unit 13 (step S1) when predetermined operation for message input is performed at the operating unit 14 during game processing by the game processing unit 21. The post processing unit 23 determines whether input of a message has been finished or not on the basis of whether operation to the "OK" button has been performed at the message input screen or not (step S2).

When input of a message has not been finished (S2: NO), the post processing unit 23 returns the process to step S1 and continues display of the message input screen. When input of a message is finished (S2: YES), the post processing unit 23 accepts input of information such as the theme and the message text using the message input screen (step S3). The post processing unit 23 transmits the message, input of which has been accepted, from the communication unit 15 via the network 99 to the game server 3 (step S4), and terminates the process.

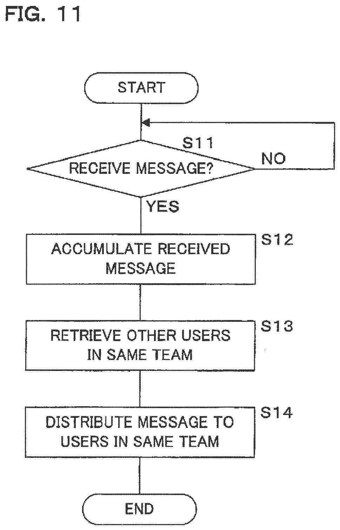

Figure 11 shows an example non-limiting flowchart for illustrating the procedures of message post processing to be performed by the game server 3. The post processing unit 43 of the game server 3 according to this embodiment determines whether a message from a game machine 1 has been received at the communication unit 33 via the network 99 or not (step S11). When a message has not been received (S11: NO), the post processing unit 43 waits until a message from a game machine 1 is received. When a message from a game machine 1 is received (S11: YES), the post processing unit 43 accumulates the received message in the message accumulation unit 31b of the storage unit 31 (step S12).

The post processing unit 43 refers to the user information 31a stored in the storage unit 31, and retrieves other users who belong to the same team as the user who has posted the received message (step S13). The post processing unit 43 distributes the message, which has been received in step S11, from the communication unit 33 to the retrieved users in the same team (step S14), and terminates the process.

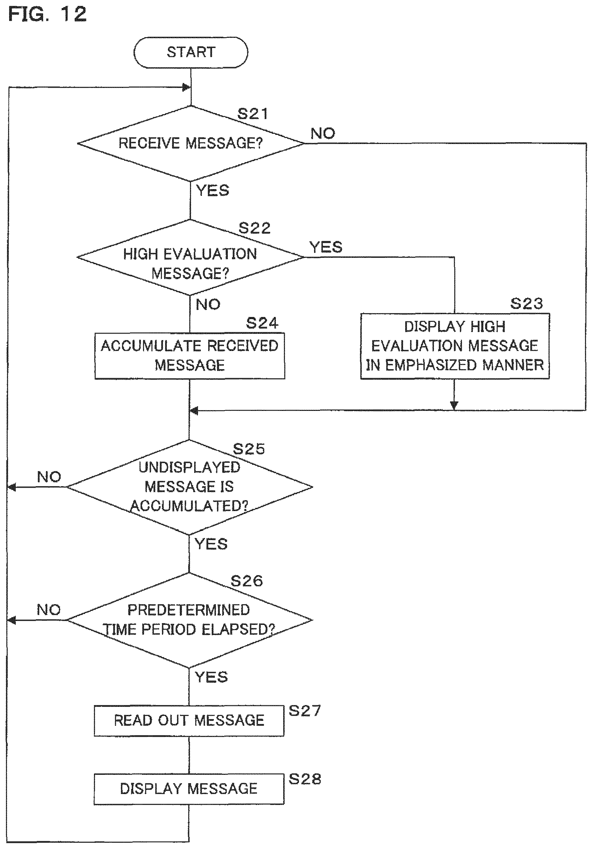

Figure 12 shows an example non-limiting flowchart for illustrating the procedures of message display processing to be performed by a game machine 1. The post processing unit 23 of the game machine 1 determines whether a message distributed from the game server 3 has been received at the communication unit 15 or not (step S21). When a message has been received (S21: YES), the post processing unit 23 determines whether the received message is a high evaluation message or not (step S22). When the message is a high evaluation message (S22: YES), the display processing unit 22 of the game machine 1 displays the received high evaluation message in an emphasized manner utilizing the balloon 104 (step S23), and proceeds the process to step S25. When the message is not a high evaluation message (S22: NO), the post processing unit 23 accumulates the received message in the message accumulation unit 11a of the storage unit 11 (step S24), and proceeds the process to step S25. When a message has not been received (S21: NO), the post processing unit 23 proceeds the process to step S25.

The display processing unit 22 of the game machine 1 determines whether an undisplayed message is accumulated in the message accumulation unit 11a of the storage unit 11 or not (step S25). When a message is not accumulated (S25: NO), the display processing unit 22 returns the process to step S21. When a message is accumulated (S25: YES), the display processing unit 22 determines whether a predetermined time period has been elapsed after the last time message display or not (step S26). When the predetermined time period has not elapsed (S26: NO), the display processing unit 22 returns the process to step S21. When the predetermined time period has elapsed after the last time message display (S26: YES), the display processing unit 22 reads out the oldest undisplayed message from the message accumulation unit 11a (step S27). The display processing unit 22 displays the message, which has been read out from the message accumulation unit 11a, in the game screen of the display unit 13 utilizing the balloon 102 (step S28), and returns the process to step S21.

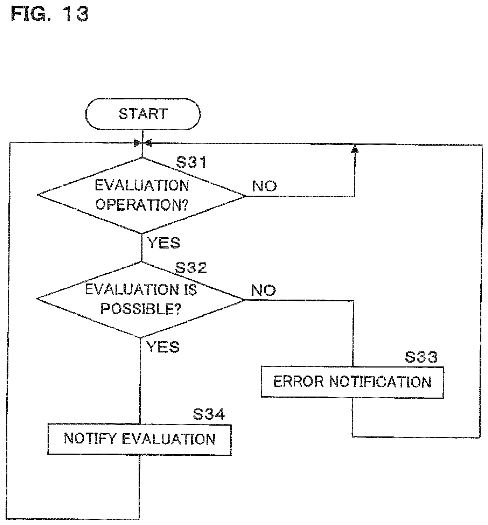

Figure 13 shows an example non-limiting flowchart for illustrating the procedures of processing involved in message evaluation to be performed by a game machine 1. The evaluation processing unit 24 of the game machine 1 determines whether predetermined evaluation operation for evaluating a message, such as operation to the evaluation button 103 in the balloon 102 displayed in the game screen, has been performed or not (step S31). When evaluation operation has not been performed (S31: NO), the evaluation processing unit 24 waits until operation is performed.

When evaluation operation is performed (S31: YES), the evaluation processing unit 24 determines whether the user of the game machine 1 can evaluate a message or not (step S32). That is, the evaluation processing unit 24 determines whether one or more evaluation rights are left for the user or not. At this time, the evaluation processing unit 24 may make an inquiry about the number of evaluation rights owned by the user to the game server 3. When evaluation is impossible (S32: NO), the evaluation processing unit 24 makes error notification (step S33) by displaying an error message, for example, and returns the process to step S31.

It is to be noted that, although this embodiment employs a structure wherein whether an evaluation right is left or not is determined after evaluation operation is performed and error notification is made when an evaluation right is not left, this is not restrictive. The example embodiment may employ a structure wherein evaluation operation is not accepted by graying out a button for evaluation, for example, when an evaluation right is not left.

When evaluation to a message is possible (S32: YES), the evaluation processing unit 24 notifies the game server 3 of the fact that an evaluation by a user has been made to a message being displayed (step S34), and returns the process to step S31.

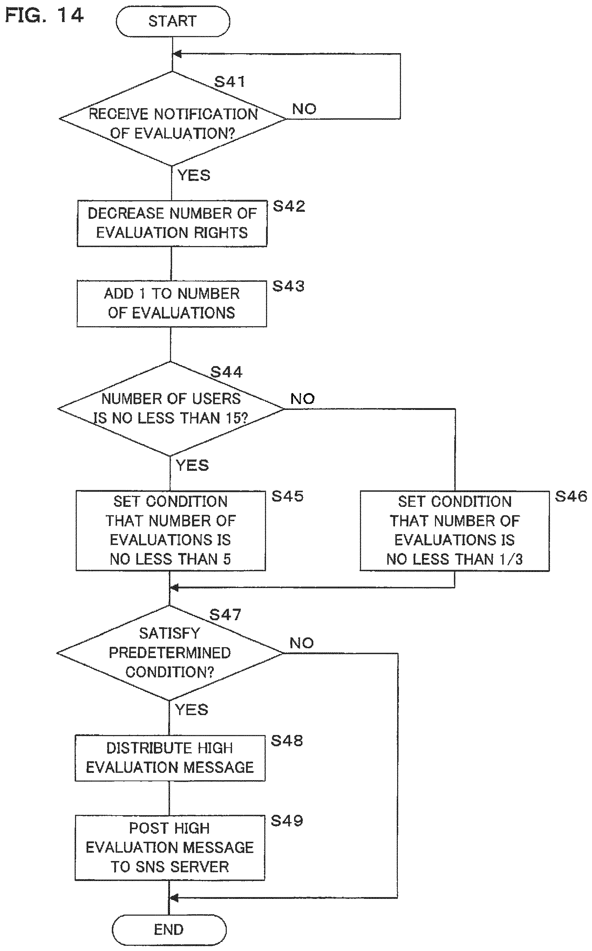

Figure 14 shows an example non-limiting flowchart for illustrating the procedures of processing involved in message evaluation to be performed by the game server 3. The processing unit 30 of the game server 3 determines whether notification that evaluation to a message from a game machine 1 has been received at the communication unit 33 or not (step S41). When notification of evaluation has not been received (S41: NO), the processing unit 30 waits until notification is received. When notification of evaluation is received (S41: YES), the user management unit 42 of the processing unit 30 performs processing to decrease the number of evaluation rights related to the user who has made the evaluation (step S42). The evaluation processing unit 44 of the processing unit 30 adds 1 to the number of evaluations stored for the evaluated message (step S43).

The evaluation processing unit 44 determines whether the number of users in a team to which the user who has posted the message belongs is no less than 15 or not (step S44). When the number of the users is no less than 15 (S44: YES), the evaluation processing unit 44 sets a condition that the number of evaluations to the message is no less than 5 as the predetermined condition (step S45), and proceeds the process to step S47. When the number of the users is less than 15 (S44: NO), the evaluation processing unit 44 sets a condition that the number of evaluations to the message is no less than 1/3 as the predetermined condition (step S46), and proceeds the process to step S47.

The evaluation processing unit 44 determines whether the number of evaluations to the message satisfies the predetermined condition or not (step S47). When it is determined that the predetermined condition is satisfied (S47: YES), the evaluation processing unit 44 distributes the message, which satisfies the predetermined condition, as a high evaluation message to the game machines 1 (step S48). The evaluation processing unit 44 transmits the message from the communication unit 33 to the SNS server 5 so as to post the high evaluation message to the SNS server 5 (step S49), and terminates the process. When it is determined that the predetermined condition is not satisfied (S47: NO), the evaluation processing unit 44 terminates the process.

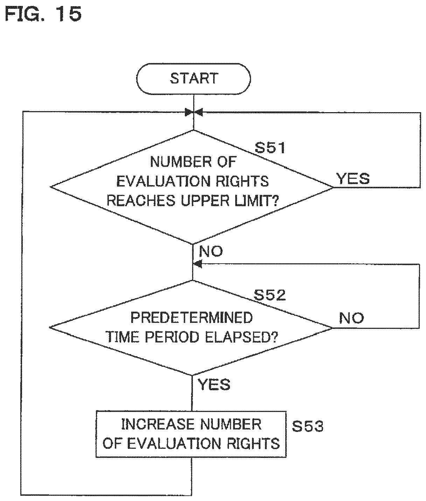

Figure 15 shows an example non-limiting flowchart for illustrating the procedures of evaluation right management processing to be performed by the game server 3. The user management unit 42 of the game server 3 performs the processing illustrated in the figure for each user registered in the user information 31a. The user management unit 42 determines whether the number of evaluation rights of the user has reached the upper limit or not (step S51). When the upper limit has been reached (S51: YES), the user management unit 42 waits until the number of evaluation rights of the user decreases.

When the number of evaluation rights has not reached the upper limit (S51: NO), the user management unit 42 determines whether a predetermined time period has elapsed after the number of evaluation rights of the user increased or decreased last time or not (step S52). When the predetermined time period has not elapsed (S52: NO), the user management unit 42 waits until a predetermined time period elapses. When the predetermined time period elapses (S52: YES), the user management unit 42 increases the number of evaluation rights related to the user by one (step S53), and returns the process to step S51.

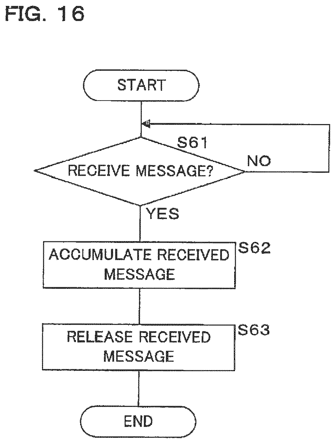

Figure 16 shows an example non-limiting flowchart for illustrating the procedures of processing to be performed by the SNS server 5. The post processing unit 62 of the SNS server 5 according to this embodiment determines whether a message posted from a terminal device such as a game machine 1, a PC 7a or a smartphone 7b, or the game server 3 has been received at the communication unit 53 via the network 99 or not (step S61). When a message has not been received (S61: NO), the post processing unit 62 waits until a message is received. When a message is received (S61: YES), the post processing unit 62 accumulates the received message in the message accumulation unit 51b of the storage unit 51 (step S62). The post processing unit 62 releases the received message (step S63) in the form of a bulletin board, for example, and terminates the process.

### <Conclusion>

An information processing system according to this embodiment having the above structure is a game system for realizing a game, in which a plurality of users who use a plurality of game machines 1 participate, through communication between the game server 3 and the game machines 1 via the network 99. In each game machine 1, the post processing unit 23 accepts input of a message and transmits the message to the game server 3 during a game realized by the game processing unit 21. In the game server 3, the post processing unit 43 receives a message transmitted from a game machine 1, and accumulates the message in the message accumulation unit 31b. The post processing unit 23 distributes the received message to game machines 1 used by other users in a team to which the poster of the message belongs.

When a game machine 1 receives a message distributed from the game server 3, the display processing unit 22 performs processing to display the received message at the display unit 13. At this time, the display processing unit 22 displays a message in a manner that it is impossible to distinguish which user the distributor is. That is, the display processing unit 22 does not display the user ID or the like of a user who has posted the message, and performs anonymous message display. This can make it easy to exchange messages between users in an online game. Even a user who is unaccustomed to an online game can exchange messages with another user more easily. It is therefore expected to promote communications between users who participate in an online game.

The evaluation processing unit 24 of the game machine 1 accepts operation for evaluation to a message displayed in the game screen, and transmits information on the evaluation operation to the game server 3. The evaluation processing unit 44 of the game server 3 performs processing to total the number of evaluations to the message and determine whether the number of evaluations satisfies the predetermined condition or not. The display processing unit 22 of the game machine 1 displays a message, which has been determined as satisfying the predetermined condition, in a manner that it is possible to distinguish a user who has posted the message. More specifically, the evaluation processing unit 44 of the game server 3 distributes a message, which satisfies the predetermined condition, as a high evaluation message to game machines 1. When a game machine 1 receives the high evaluation message, the display processing unit 22 of the game machine 1 displays the high evaluation message after attaching the user ID of the poster. At this time, the evaluation processing unit 44 of the game server 3 distributes the high evaluation messages not only to the team to which the user who has posted the high evaluation message belongs but also to a wider range of users such as users in other teams in the online game or users of the SNS managed by the SNS server 5. This can enhance the will to post a message of a user who participates in an online game and also raise the quality of a message to be posted. Beneficial and highly evaluated information is made possible to be shared by a number of users. It is possible to prevent lowly evaluated information from being shared widely over teams.

Each game machine 1 accumulates information, which has been distributed from the game server 3, in the message accumulation unit 11a. The display processing unit 22 of the game machine 1 displays a predetermined number of accumulate messages at every predetermined time in the order of accumulation. The display processing unit 22 hides a displayed message after a predetermined time period elapses. For example, the display processing unit 22 reads out and displays the oldest undisplayed message at every predetermined time period from the message accumulation unit 11a. This can make it easy to exchange messages, since real time property is lost in processing to display a message to be exchanged between a plurality of users.

The setting processing unit 25 of the game machine 1 accepts setting involved in message display by the display processing unit 22. For example, the setting processing unit 25 accepts setting involved in a predetermined time period for switching message display, and the display processing unit 22 acquires and displays a message at every predetermined time period according to the setting. For another example, the setting processing unit 25 accepts setting involved in the number of messages to be displayed simultaneously, and the display processing unit 22 displays a set number of messages at every predetermined time period. This allows the user of each game machine 1 to make his favorite display setting regarding display of a message distributed from the game server 3.

The setting processing unit 25 accepts predetermined rejection operation to a displayed message. When accepting the predetermined rejection operation, the setting processing unit 25 registers a user, who has posted the target message, in the rejection list. The display processing unit 22 of the game machine 1 does not display a message which has been posted by a user registered in the rejection list. This can prevent the game machine 1 from displaying an improper message or the like, which does not suit preference of the user, at the display machine 1.

The evaluation processing unit 44 of the game server 3 performs processing to post a high evaluation message, which has been determined as satisfying the predetermined condition, to the SNS server 5. The SNS server 5 releases or distributes a posted message, so that the message is made possible to be shared by terminal devices such as the game machines 1 and the PC 7a. This makes it possible to share a message, which has been shared in a team (first group) of an online game, in a second group composed of SNS users. Users who participate in the first group and users who participate in the second group do not coincide completely. The first group is a group related to an online game service. The second group is a group related to a social networking service. The first group and the second group are respectively provided as different services. The second group is larger in scale (has more users) than the first group. This makes it possible to extract a highly evaluated message from messages shared in a small group and share the message in a large group. It is possible to prevent a lowly evaluated message such as an improper message from being spread from a small group to a large group. This can raise the quality of a message to be shared in a large group

In response to good evaluation operation to a message, the evaluation processing unit 44 of the game server 3 determines whether the message is to be handled as a high evaluation message or not. More specifically, the evaluation processing unit 44 determines whether the message is to be handled as a high evaluation message or not according to whether the number of good evaluations to the message satisfies a predetermined condition or not. The predetermined condition to be used for determination by the evaluation processing unit 44 is a condition set according to the number of users included in the team (first group). This makes it possible to make proper determination according to the scale of the team.

In an information processing system according to this embodiment, an upper limit is set on the number of times of evaluation to a message by each user. When evaluation to a message is made once, the number of evaluations owned by the user who has made the evaluation decreases by one. The number of times of evaluation increases by one at every predetermined time period. In such a manner, the limit on evaluation to a message makes it possible to carefully select a message to be automatically distributed to the SNS server 5 as a high evaluation message and can raise the quality of a message.

It is to be noted that, although this embodiment sets a team composed of users of an online game as a first group and a group composed of SNS users as a second group, this is only exemplary and not restrictive. For example, a group composed of all users of an online game or users having a friend relationship may be set as a first group or a second group. The first group and the second group may respectively be a group related to a service other than the SNS or an online game. Although the above first group is one of a plurality of teams existing in an online game, this is not restrictive. Although the above second group is a group including a first group, this is not restrictive. The first group and the second group may be constructed so that some of the users overlap with each other, or so that no user overlaps. The first group and the second group are only required to be constructed so that composing users do not coincide perfectly with each other (at least some users are different). Although this embodiment employs a structure wherein users in the first group are managed by the game server 3 and users in the second group are managed by the SNS server 5, this is not restrictive. Users in the first group and users in the second group may be managed by one server, or may be managed distributively by three or more servers. That is, both of the online game service and the SNS service may be provided by one server, or may be provided by three or more servers in cooperation.

The game screen, the setting screen and the like illustrated in Figures 5 to 9 are only exemplary and not restrictive. Although this embodiment employs a structure wherein a message is displayed using a balloon 101, 102 or 104, this is not restrictive and a message may be displayed in any method. Although this embodiment employs a structure wherein a high evaluation message is displayed in the balloon 104 in an emphasized manner, this is not restrictive and emphatic display may not be performed.

Although an information processing system according to this embodiment employs a structure wherein only good evaluation is accepted as evaluation to a displayed message, this is not restrictive. The example embodiment may employ a structure wherein both of good evaluation and bad evaluation to a message are accepted. In such a case, the evaluation processing unit 44 of the game server 3 may determinate a high evaluation message considering the number of bad evaluations. The message accumulation unit 11a of the game machine 1 is not necessarily disposed in a nonvolatile storage unit but may be disposed in a volatile storage unit.

The procedures of processing by the game machines 1, the game server 3 and the SNS server 5 illustrated in this embodiment are only exemplary and not restrictive. The device configuration of the information processing system and the function apportionment of the respective devices are not limited to those described in this embodiment. For example, the game server 3 or the SNS server 5 may have at least a part of the function of the game machine 1 described in this embodiment. On the contrary, the game machine 1 may have at least a part of the function of the game server 3 or the SNS server 5 described in this embodiment.

### (Variation)

In a game machine 1 according to a variation, a message distributed by a game server 3 is accumulated in a message accumulation unit 11a and the message is continuously accumulated after being displayed by a display processing unit 22. The user of the game machine 1 can browse a message, which is accumulated in the message accumulation unit 11a, by selecting an item of message browsing in a menu screen of a game, for example. When an item of message browsing is selected, the display processing unit 22 of the game machine 1 displays a list of titles or the like of messages, which are accumulated in the message accumulation unit 11a, at a display unit 13. At this time, a processing unit 10 of the game machine 1 may accept input of a condition such as the poster or the post date of a message from the user and retrieve or sort the message.

When selection of any one message is accepted in a state where the message list is displayed at the display unit 13, the display processing unit 22 displays the details of the selected message at the display unit 13. It is to be noted that an evaluation processing unit 24 of the game machine 1 may accept evaluation to the displayed message at this time.

The processing unit 10 of the game machine 1 according to the variation accepts operation for delete of a message, which is accumulated in the message accumulation unit 11a, from the user. When operation for delete is performed, the processing unit 10 deletes the message to be deleted from the message accumulation unit 11a. An upper limit may be set on the number of messages to be accumulated in the message accumulation unit 11a, so that the game machine 1 automatically deletes messages from the oldest one when the number of messages exceeds the upper limit. The accumulation time period of a message such as one week or one month may be set, so that the game machine 1 automatically deletes a message when the time period for the message is exceeded.

As described above, the game machine 1 according to the variation accumulates a message, which has been displayed during a game, in the message accumulation unit 11a without deleting the message. This allows the user to recheck a message later in a case where he overlooks the message during a game, for example.

It is to be noted that, although this variation employs a structure wherein the game machine 1 accumulates messages, this is not restrictive. For example, the example embodiment may employ a structure wherein the game server 3 or the SNS server 5 accumulates messages and the game machine 1 acquires the accumulated messages, the list thereof and the like from the game server 3 or the SNS server 5.

When used in the present specification, each element or the like denoted in a singular form with a word "a" or "an" attached in front thereof is to be understood not to eliminate the probability of a plurality of elements related thereto.

### [Description of the Reference Numerals]

- 1: Game Machine
- 3: Game Server
- 5: SNS Server
- 7a: PC
- 7b: Smartphone
- 10: Processing Unit
- 11: Storage Unit
- 11a: Message Accumulation Unit
- 12: Recording Medium Mounting Unit
- 13: Display Unit
- 14: Operating Unit
- 15: Communication Unit
- 21: Game Processing Unit
- 22: Display Processing Unit
- 23: Post Processing Unit
- 24: Evaluation Processing Unit
- 25: Setting Processing Unit
- 30: Processing Unit
- 31: Storage Unit
- 31a: User Information
- 31b: Message Accumulation Unit
- 32: Recording Medium Mounting Unit
- 33: Communication Unit
- 41: Game Management Unit
- 42: User Management Unit
- 43: Post Processing Unit
- 44: Evaluation Processing Unit
- 50: Processing Unit
- 51: Storage Unit
- 51a: User Information
- 51b: Message Accumulation Unit
- 52: Recording Medium Mounting Unit
- 53: Communication Unit
- 61: User Management Unit
- 62: Post Processing Unit
- 91: Recording Medium
- 91a: Game Program
- 92: Recording Medium
- 92a: Server Program
- 93: Recording Medium
- 93a: Server Program
- 99: Network
- 101,: 102, 104 Balloon
- 103: Evaluation Button

## Claims

1. An information sharing system, which enables information sharing between a plurality of users, through communication between a server (3) and a plurality of terminal devices (1) via a network, each terminal device of the plurality of terminal devices being used by a user from the plurality of users, wherein the terminal device (1) includes:
a post accepting unit (23) accepting posting from a user;
a post information transmitting unit (23) transmitting post information on posting, which has been accepted by the post accepting unit (23), to the server (3);
a first post information receiving unit (23) receiving post information distributed from the server (3);
a display processing unit (22) performing processing to display post information, which has been received by the first post information receiving unit (23), at a display unit (13);
an operation accepting unit (24) accepting predetermined evaluation operation of the user related to post information displayed by the display processing unit (22); and
an operation information transmitting unit (24) transmitting operation information which has been accepted by the operation accepting unit (24), to the server (3), the server (3) includes:
a second post information receiving unit (43) receiving post information transmitted from the terminal device (1);
a post information distributing unit (43) distributing post information, which has been received by the second post information receiving unit (43), to the terminal device (1) used by a user included in a first group;
an operation information receiving unit (30) receiving operation information transmitted from the terminal device (1); and
**characterized in that** the server (3) includes,
a post information determination unit (44) determining whether post information related to the operation information received by the operation information receiving unit (30) satisfies a predetermined condition or not on the basis of the operation information received by the operation information receiving unit (30), and
post information, which has been determined by the post information determination unit (44) as satisfying the predetermined condition, is made possible to be shared at the terminal device (1) used by a user included in a second group, which is at least partially different from the first group,
wherein the post information determination unit (44), based on the predetermined evaluation operation related to the post information by a user other than a user who posted the post information, determines if the post information satisfies the predetermined condition or not.

2. The information sharing system according to Claim 1, wherein the post information distributing unit (43) of the server (3) distributes post information to a first group, including a user who has posted the post information.

3. The information sharing system according to Claim 1 or 2, wherein the operation accepting unit (24) accepts evaluation operation related to post information displayed by the display processing unit (22).

4. The information sharing system according to Claim 3, wherein the post information determination unit (44) determines whether post information satisfies a predetermined condition or not on the basis of operation information involved in evaluation from a plurality of users, which has been received by the operation information receiving unit (30).

5. The information sharing system according to Claim 4, wherein the predetermined condition is a condition based on a fact that a plurality of users have highly evaluated the post information.

6. The information sharing system according to any one of Claims 1 to 5, further comprising a condition changing unit (44) changing the predetermined condition according to the number of users included in the first group.

7. The information sharing system according to Claim 6, wherein the server (3) includes the condition changing unit (44).

8. The information sharing system according to any one of Claims 1 to 7, further comprising a number management unit (42) managing for each user, the number of times each user can perform predetermined operation related to the post information.

9. The information sharing system according to Claim 8, wherein the number management unit (42) decreases the number of times when a user performs the predetermined operation and increases the number of times when a predetermined increase condition is satisfied after decrease in the number of times.

10. The information sharing system according to Claim 9, wherein the number management unit (42) increases the number of times using a condition based on time elapsed as the predetermined increase condition.

11. The information sharing system according to any one of Claims 1 to 10, wherein the server (3) further includes a second post information distributing unit (43) distributing post information, which has been determined by the post information determination unit (44) as satisfying a predetermined condition, to a terminal device (1) used by a user included in the second group.

12. The information sharing system according to any one of Claims 1 to 11, wherein the number of users in the second group is larger than the number of users in the first group.

13. The information sharing system according to any one of Claims 1 to 12, wherein the first group and the second group are respectively provided as different services.

14. The information sharing system according to Claim 13, wherein
the second group is a group of users who use a social networking service, and
the first group is a group of users who use a service other than a social networking service.

15. A server (3), which enables information sharing between a plurality of users, through communication with a plurality of terminal devices (1) via a network, each terminal device of the plurality of terminal devices being used by one of the plurality of users, comprising:
a post information receiving unit (43) receiving post information transmitted from the terminal device (1);
a post information distributing unit (43) distributing post information, which has been received by the post information receiving unit (43), to the terminal device (1) used by a user included in a first group;
an operation information receiving unit (30) receiving information on predetermined operation, which has been accepted by the terminal device (1) for post information distributed by the post information distributing unit (43), from the terminal device (1); and **characterized in that** a post information determination unit (44) determining whether post information related to the operation information received by the operation information receiving unit (30) satisfies a predetermined condition or not on the basis of the operation information received by the operation information receiving unit (30), and
wherein post information, which has been determined by the post information determination unit (44) as satisfying the predetermined condition, is made possible to be shared at the terminal device (1) used by a user included in a second group, which is at least partially different from the first group,
wherein the post information determination unit (44), based on the predetermined evaluation operation related to the post information by a user other than a user who posted the post information, determines if the post information satisfies the predetermined condition or not.

16. A server program capable of causing a server (3) enabling information sharing between a plurality of users, through communication with a plurality of terminal devices (1) via a network, each terminal device of the plurality of terminal devices being used by one of the plurality of users to operate as:
post information receiving means (43) for receiving post information transmitted from the terminal device (1); post information distributing means (43) for distributing post information, which has been received by the post information receiving means (43), to the terminal device (1) used by a user included in a first group;
operation information receiving means (30) for receiving information on predetermined operation, which has been accepted by the terminal device (1) for post information distributed by the post information distributing means (43), from the terminal device (1);
**characterized in that**,
post information determination means (44) for determining whether post information related to the operation information received by the operation information receiving means (30) satisfies a predetermined condition or not on the basis of the operation information received by the operation information receiving unit (30); and
means for enabling sharing of post information, which has been determined by the post information determination means (44) as satisfying the predetermined condition, at the terminal device (1) used by a user included in a second group, which is at least partially different from the first group,
wherein the post information determination means (44), based on the predetermined evaluation operation related to the post information by a user other than a user who posted the post information, determines if the post information satisfies the predetermined condition or not.

17. An information sharing method, which enables information sharing between a plurality of users, through communication between a server (3) and a plurality of terminal devices (1) via a network, each terminal device of the plurality of terminal devices being used by one of the plurality of users, comprising:
a post accepting step (S3) of accepting posting from a user by the terminal device (1);
a post information transmitting step (S4) of transmitting post information on posting, which has been accepted in the post accepting step, to the server (3);
a first post information receiving step (S11) of receiving post information, which has been transmitted in the post information transmitting step, by the server (3);
a post information distributing step (S14) of distributing post information, which has been received in the first post information receiving step, to the terminal device (1) used by a user included in a first group;
a second post information receiving step (S21) of receiving post information, which has been distributed in the post information distributing step, by the terminal device (1);
a display processing step (S23, S28) of performing processing to display post information, which has been received in the second post information receiving step, at a display unit (13);
an operation accepting step (S31) of accepting predetermined evaluation operation of the user related to post information displayed in the display processing step;
an operation information transmitting step (S34) of transmitting operation information which has been accepted in the operation accepting step, to the server (3);
an operation information receiving step (S41) of receiving operation information, which has been transmitted in the operation information transmitting step, by the server (3);
**characterized in that** the method further comprises;
a post information determination step (S47) of determining whether post information related to the operation information received by the operation information receiving means (30) satisfies a predetermined condition or not on the basis of the operation information received in the operation information receiving step; and
a step of enabling sharing of post information (S48), which has been determined in the post information determination step as satisfying the predetermined condition, at the terminal device (1) used by a user included in a second group, which is at least partially different from the first group,
wherein the post information determination step, based on the predetermined evaluation operation related to the post information by a user other than a user who posted the post information, of determining if the post information satisfies the predetermined condition or not.

## Patentansprüche

1. Informationsaustauschsystem, welches einen Informationsaustausch zwischen einer Vielzahl von Benutzern ermöglicht, durch Kommunikation zwischen einem Server (3) und einer Vielzahl von Terminalvorrichtungen (1), über ein Netzwerk, wobei jede Terminalvorrichtung der Vielzahl von Terminalvorrichtungen von einem Benutzer aus der Vielzahl von Benutzern verwendet wird, wobei
die Terminalvorrichtung (1) beinhaltet:
eine Beitragsannahmeeinheit (23), die einen Beitrag von einem Benutzer annimmt;
eine Beitragsinformationsübertragungseinheit (23), die Beitragsinformation beim Beitragen an den Server (3) überträgt, welche von der Beitragsannahmeeinheit (23) angenommen wurde;
eine erste Beitragsinformationsempfangseinheit (23), die Beitragsinformation empfängt, welche von dem Server (3) verteilt wird;
eine Anzeigeverarbeitungseinheit (92), die ein Verarbeiten durchführt, um die Beitragsinformation anzuzeigen, welche von der ersten Beitragsinformationsempfangseinheit (23) empfangen wurde, bei einer Anzeigeeinheit (13);
eine Operationsannahmeeinheit (24), welche eine vorbestimmte Bewertungsoperation des Benutzers mit Bezug zu der Beitragsinformation, welche durch die Anzeigeverarbeitungseinheit (22) angezeigt wird, annimmt; und
eine Operationsinformationsübertragungseinheit (24), welche die Operationsinformation an den Server (3) überträgt, welche durch die Operationsannahmeeinheit (24) angenommen wurde,
wobei der Server (3) beinhaltet:
eine zweite Beitragsinformationsempfangseinheit (43), welche Beitragsinformation, die von der Terminalvorrichtung (1) übertragen wird, empfängt;
eine Beitragsinformationsverteileinheit (43), welche Beitragsinformation verteilt, welche durch die zweite Beitragsinformationsempfangseinheit (43) empfangen wurde, an die Terminalvorrichtung (1), die durch einen Benutzer, der in der ersten Gruppe beinhaltet ist, verwendet wird;
eine Operationsinformationsempfangseinheit (30), welche Operationsinformation, die von dem Terminal (1) übertragen wird, empfängt; und **dadurch gekennzeichnet, dass** der Server (3) beinhaltet,
eine Beitragsinformationsbestimmungseinheit (44), die bestimmt, ob die Beitragsinformation mit Bezug zu der Operationsinformation, welche durch die Operationsinformationsempfangseinheit (30) empfangen wird, einer vorbestimmten Bedingung genügt oder nicht, auf der Basis der Operationsinformation, die durch die Operationsinformationsempfangseinheit (30) empfangen wird, und wobei es möglich gemacht wird, dass Beitragsinformation, welche durch die Beitragsinformationsbestimmungseinheit (44) dazu bestimmt wurde, der vorbestimmten Bedingung zu genügen, bei der Terminalvorrichtung (1) geteilt wird, die durch einen Benutzer, der in einer zweiten Gruppe beinhaltet ist, verwendet wird, die zumindest teilweise unterschiedlich ist von der ersten Gruppe,
wobei die Beitragsinformationsbestimmungseinheit (44), basierend auf der vorbestimmten Bewertungsoperation mit Bezug zu der Beitragsinformation durch einen anderen Benutzer als ein Benutzer, der die Beitragsinformation beigetragen hat, bestimmt, ob die Beitragsinformation der vorbestimmten Bedingung genügt oder nicht.

2. Informationsaustauschsystem gemäß Anspruch 1, wobei die Beitragsinformationsverteileinheit (43) des Servers (3) Beitragsinformation an eine erste Gruppe, die einen Benutzer beinhaltet, der die Beitragsinformation beigetragen hat, verteilt.

3. Informationsaustauschsystem gemäß Anspruch 1 oder 2, wobei die Operationsannahmeeinheit (24) eine Bewertungsoperation mit Bezug zu der Beitragsinformation, die durch die Anzeigeverarbeitungseinheit (22) angezeigt wird. annimmt.

4. Informationsaustauschsystem gemäß Anspruch 3, wobei die Beitragsinformationsbestimmungseinheit (44) bestimmt, ob die Beitragsinformation einer vorbestimmten Bedingung genügt oder nicht, auf der Basis der Operationsinformation, die mit einer Bewertung von einer Vielzahl von Benutzern involviert ist, welche durch die Operationsinformationsempfangseinheit (30) empfangen wurde.

5. Informationsaustauschsystem gemäß Anspruch 4, wobei die vorbestimmte Bedingung eine Bedingung ist, die auf einer Tatsache basiert, dass eine Vielzahl von Benutzern die Beitragsinformation hoch bewertet haben.

6. Informationsaustauschsystem gemäß irgendeinem der Ansprüche 1 bis 5, ferner umfassend eine Bedingungsänderungseinheit (44), welche die vorstimmte Bedingung gemäß der Anzahl von Benutzern, die in der ersten Gruppe beinhaltet ist, ändert.

7. Informationsaustauschsystem gemäß Anspruch 6, wobei der Server (3) die Bedingungsänderungseinheit (44) beinhaltet.

8. Informationsaustauschsystem gemäß irgendeinem der Ansprüche 1 bis 7, ferner umfassend eine Anzahlverwaltungseinheit (42), welche für jeden Benutzer verwaltet, wie oft ein Benutzer eine vorbestimmte Operation mit Bezug zu der Beitragsinformation durchführen kann.

9. Informationsaustauschsystem gemäß Anspruch 8, wobei die Anzahlverwaltungseinheit (42) die Anzahl, wie oft ein Benutzer die vorbestimmte Operation durchführt, verringert und die Anzahl, wie oft ein eine vorbestimmte Erhöhebedingung erfüllt wird, erhöht, nachdem die Anzahl, wie oft ein Benutzer die vorbestimmte Operation durchführt, verringert wurde.

10. Informationsverarbeitungssystem gemäß Anspruch 9, wobei die Anzahlverwaltungseinheit (42) die Anzahl unter Verwendung einer Bedingung erhöht, basierend auf einer abgelaufenen Zeit als die vorbestimmte Erhöhebedingung.

11. Informationsaustauschsystem gemäß irgendeinem der Ansprüche 1 bis 10, wobei der Server (3) ferner eine zweite Beitragsinformationsverteileinheit (43) beinhaltet, welche Beitragsinformation verteilt, welche durch die Beitragsinformationsbestimmungseinheit (44) bestimmt wurde, als eine vorbestimmte Bedingung erfüllend, an eine Terminalvorrichtung (1), die durch einen Benutzer verwendet wird, der in der zweiten Gruppe beinhaltet ist.

12. Informationsaustauschsystem gemäß irgendeinem der Ansprüche 1 bis 11, wobei die Anzahl Benutzer in der zweiten Gruppe größer ist als die Anzahl Benutzer in der ersten Gruppe.

13. Informationsaustauschsystem gemäß irgendeinem der Ansprüche 1 bis 12, wobei die erste Gruppe und die zweite Gruppe jeweils als unterschiedliche Dienste bereitgestellt sind.

14. Informationsaustauschsystem gemäß Anspruch 13, wobei die zweite Gruppe eine Gruppe von Benutzern ist, welche einen sozialen Netzwerkdienst verwenden und die erste Gruppe eine Gruppe von Benutzern ist, die einen anderen Dienst als einen sozialen Netzwerkdienst verwenden.

15. Server (3), welcher einen Informationsaustausch zwischen einer Vielzahl von Benutzern ermöglicht, durch Kommunikation mit einer Vielzahl von Terminalvorrichtung (1), über ein Netzwerk, wobei jedes Terminal der Vielzahl von Terminalvorrichtungen durch einen aus der Vielzahl von Benutzern verwendet wird, umfassend:
eine Beitragsinformationsempfangseinheit (43), die Beitragsinformation empfängt, welche von der Terminalvorrichtung (1) übermittelt wird;
eine Beitragsinformationsverteileinheit (43), die Beitragsinformation verteilt, welche durch die Beitragsinformationsempfangseinheit (43) empfangen wurde, an die Terminalvorrichtung (1), die durch einen Benutzer, der in einer ersten Gruppe beinhaltet ist, verwendet wird;
eine Operationsinformationsempfangseinheit (30), die Information über eine vorbestimmte Operation empfängt, welche durch die Terminalvorrichtung (1) für Beitragsinformation akzeptiert wurde, die durch die Beitragsinformationsverteileinheit (43) von der Terminalvorrichtung (1) verteilt wird; und **dadurch gekennzeichnet, dass**
die Beitragsinformationsbestimmungseinheit (44), die bestimmt, ob Beitragsinformation mit Bezug zu der Operationsinformation, die durch die Operationsinformationsempfangseinheit (30) empfangen wird, einer vorbestimmten Bedingung genügt oder nicht, auf der Basis der Operationsinformation, die durch die Operationsinformationsempfangseinheit (30) empfangen wird, und wobei es möglich gemacht wird, dass Beitragsinformation, welche durch die Beitragsinformationsbestimmungseinheit (44) bestimmt wurde als die vorbestimmte Bedingung erfüllend, an die Terminalvorrichtung (1) ausgetauscht wird, die durch einen Benutzer, der in einer zweiten Gruppe beinhaltet ist, verwendet wird, welche zumindest teilweise unterschiedlich von der ersten Gruppe ist,
wobei die Beitragsinformationsbestimmungseinheit (44), basierend auf der vorbestimmten Bewertungsoperation mit Bezug zu der Beitragsinformation durch einen anderen Benutzer als der Benutzer, der die Beitragsinformation beigetragen hat, bestimmt, ob die Beitragsinformation der vorbestimmten Bedingung genügt oder nicht.

16. Serverprogramm, das in der Lage ist, einen Server (3) zu veranlassen, einen Informationsaustausch zwischen einer Vielzahl von Benutzern zu ermöglichen, durch Kommunikation mit einer Vielzahl von Terminalvorrichtungen (1), über ein Netzwerk, wobei jede Terminalvorrichtung der Vielzahl von Terminalvorrichtungen durch einen von der Vielzahl von Benutzern verwendet wird, um zu arbeiten als:
Mittel zum Empfangen von Beitragsinformation (43), zum Empfangen von Beitragsinformation, die von der Terminalvorrichtung (1) übertragen wird,
Mittel zum Verteilen von Beitragsinformation (43), zum Verteilen von Beitragsinformation, die durch das Mittel zum Empfangen von Beitragsinformation (43) empfangen wurde, an die Terminalvorrichtung (1), die durch einen Benutzer, der in einer ersten Gruppe beinhaltet ist, verwendet wird;
Mittel zum Empfangen von Operationsinformation (30), zum Empfangen von Information über eine vorbestimmte Operation, welche durch die Terminalvorrichtung (1) zum Beitragen von Information akzeptiert wurde, welche durch das Mittel zum Verteilen der Beitragsinformation (43) von der Terminalvorrichtung (1) verteilt wird;
**dadurch gekennzeichnet, dass**
Mittel zum Bestimmen von Beitragsinformation (44), zum Bestimmen, ob Beitragsinformation mit Bezug zu der Operationsinformation, die durch das Mittel zum Empfangen der Operationsinformation (30) empfangen wird, einer vorbestimmten Bedingung genügt oder nicht, auf der Basis der Operationsinformation, die durch die Operationsinformationsempfangseinheit (30) empfangen wird; und
Mittel zum Ermöglichen eines Austausches von Beitragsinformation, welche durch das Mittel zum Bestimmen der Beitragsinformation (44) bestimmt wurde als der vorbestimmten Bedingung genügend, bei der Terminalvorrichtung (1), die durch einen Benutzer verwendet wird, der in einer zweiten Gruppe beinhaltet ist, die zumindest teilweise unterschiedlich ist von der ersten Gruppe,
wobei das Mittel zum Bestimmen der Beitragsinformation (44), basierend auf der vorbestimmten Bewertungsoperation mit Bezug zu der Beitragsinformation durch einen anderen Benutzer als ein Benutzer, der die Beitragsinformation beigetragen hat, bestimmt, ob die Beitragsinformation der vorbestimmten Bedingung genügt oder nicht.

17. Informationsaustauschverfahren, welches Informationsaustausch zwischen einer Vielzahl von Benutzern ermöglicht, durch Kommunikation zwischen einem Server (3) und einer Vielzahl von Terminalvorrichtungen (1), über ein Netzwerk, wobei jede Terminalvorrichtung der Vielzahl von Terminalvorrichtungen durch einen von der Vielzahl von Benutzern verwendet wird, umfassend:
ein Beitragsannahmeschritt (S3) zum Annehmen eines Beitrages von einem Benutzer durch die Terminalvorrichtung (1);
ein Beitragsinformationsübertragungsschritt (S4) zum Übertragen von Beitragsinformation über einen Beitrag, welcher durch den Beitragsannahmeschritt angenommen wurde, an den Server (3);
ein erster Beitragsinformationsempfangsschritt (S11), zum Empfangen von Beitragsinformation, welche in dem Beitragsinformationsübertragungsschritt übertragen wurde, durch den Server (3);
ein Beitragsinformationsverteilungsschritt (S14) zum Verteilen von Beitragsinformation, die in dem ersten Beitragsinformationsempfangsschritt empfangen wurde, an die Terminalvorrichtung (1), die durch einen Benutzer, der in einer ersten Gruppe beinhaltet ist, verwendet wird;
ein zweiter Beitragsinformationsempfangsschritt (S21) zum Empfangen von Beitragsinformation, welche in dem Beitragsinformationsverteilungsschritt durch die Terminalvorrichtung (1) verteilt wurde;
ein Anzeigeverarbeitungsschritt (S23, S28) zum Durchführen einer Verarbeitung, um die Beitragsinformation anzuzeigen, welche in dem zweiten Beitragsinformationsempfangsschritt bei einer Anzeigeeinheit (13) empfangen wurde;
ein Operationsannahmeschritt (S31) zum Annehmen einer vorbestimmten Bewertungsoperation des Benutzers mit Bezug zu der Beitragsinformation, die in dem Anzeigeverarbeitungsschritt angezeigt wird;
ein Operationsinformationsübertragungsschritt (S34) zum Übertragen von Operationsinformation, welche in dem Operationsannahmeschritt angenommen wurde, an den Server (3);
ein Operationsinformationsempfangsschritt (S41) zum Empfangen von Operationsinformation, welche in dem Operationsinformationsübertragungsschritt durch den Server (3) übertragen wurde;
**dadurch gekennzeichnet, dass** das Verfahren ferner umfasst:
ein Beitragsinformationsbestimmungsschritt (S47) zum Bestimmen, ob Beitragsinformation mit Bezug zu der Operationsinformation, die durch das Mittel zum Empfangen der Operationsinformation (30) empfangen wurde, einer vorbestimmten Bedingung genügt oder nicht, auf der Basis der Operationsinformation, die in dem Operationsinformationsempfangsschritt empfangen wird; und ein Schritt zum Ermöglichen eines Austausches von Beitragsinformation (S48), welche in dem Beitragsinformationsbestimmungsschritt bestimmt wurde, dass sie der vorbestimmten Bedingung genügt, bei der Terminalvorrichtung (1), die durch einen Benutzer, der in einer zweiten Gruppe beinhaltet ist, welche zumindest teilweise von der ersten Gruppe unterschiedlich ist, verwendet wird,
wobei der Beitragsinformationsbestimmungsschritt, basierend auf der vorbestimmten Bewertungsoperation mit Bezug zu der Beitragsinformation durch einen anderen Benutzer, als der Benutzer, der die Beitragsinformation beigetragen hat, zum Bestimmen, ob die Beitragsinformation der vorbestimmten Bedingung genügt oder nicht eingerichtet ist.

## Revendications

1. Un système de partage de l'information, qui permet le partage de l'information entre une pluralité d'utilisateurs, par l'intermédiaire de communications entre un serveur (3) et une pluralité de dispositifs terminaux (1) via un réseau, chaque dispositif terminal de la pluralité de dispositifs terminaux étant utilisé par un utilisateur de la pluralité d'utilisateurs, dans lequel
le dispositif terminal (1) comprend :
une unité d'acceptation de publication (23) acceptant le fait de publier en provenance d'un utilisateur ;
une unité d'émission d'information de publication (23) émettant une information sur le fait de publier, qui a été accepté par l'unité d'acceptation de publication (23), vers le serveur ;
une première unité de réception d'information de publication (23) recevant une information de publication distribuée depuis le serveur (3) ;
une unité de traitement d'affichage (22) exécutant un traitement pour afficher l'information de publication, qui a été reçue par la première unité de réception d'information de publication (23), sur une unité d'affichage (13) ;
une unité d'acceptation d'opération (24) acceptant une opération d'évaluation prédéterminée de l'utilisateur relative à l'information de publication affichée par l'unité de traitement d'affichage (22) ; et
une unité d'émission d'information d'opération émettant une information d'opération qui a été acceptée par l'unité d'acceptation d'opération (24), vers le serveur (3),
le serveur (3) comprend :
une seconde unité de réception d'information de publication (43) recevant une information de publication émise depuis le dispositif terminal (1) ;
une unité de distribution d'information de publication (43) distribuant une information de publication, qui a été reçue par la seconde unité de réception d'information de publication (43), vers le dispositif terminal (1) utilisé par un utilisateur faisant partie d'un premier groupe ;
une unité de réception de l'information d'opération (30) recevant une information d'opération émise à partir du dispositif terminal (1) ; et
**caractérisé en ce que** le serveur (3) comprend
une unité de détermination d'information de publication (44) déterminant si l'information de publication relative à l'information d'opération reçue par l'unité de réception d'information d'opération (30) vérifie ou non une condition prédéterminée sur la base de l'information d'opération reçue par l'unité de réception d'information d'opération (30), et
dans lequel il devient possible de partager l'information de publication, qui a été déterminée par l'unité de détermination d'information de publication (44) comme vérifiant la condition prédéterminée, au niveau du dispositif terminal (1) utilisé par un utilisateur faisant partie d'un second groupe, qui est au moins partiellement différent du premier groupe,
dans lequel l'unité de détermination d'information de publication (44), sur la base de l'opération d'évaluation prédéterminée relative à l'information de publication par un utilisateur autre qu'un utilisateur qui a publié l'information de publication, détermine si l'information de publication vérifie ou non la condition prédéterminée.

2. Le système de partage de l'information selon la revendication 1, dans lequel l'unité de distribution d'information et de publication (43) du serveur (3) distribue l'information de publication à un premier groupe, comprenant un utilisateur qui a publié l'information de publication.

3. Le système de partage de l'information selon la revendication 1 ou 2, dans lequel l'unité d'acceptation d'opération (24) accepte une opération d'évaluation relative à l'information de publication à afficher par l'unité de traitement d'affichage (22).

4. Le système de partage de l'information selon la revendication 3, dans lequel l'unité de détermination d'information de publication (44) détermine si l'information de publication vérifie ou non une condition prédéterminée sur la base de l'information d'opération impliquée dans l'évaluation en provenance d'une pluralité d'utilisateurs, qui a été reçue par l'unité de réception d'information d'opération (30).

5. Le système de partage de l'information selon la revendication 4, dans lequel la condition prédéterminée est une condition basée sur un fait qu'une pluralité d'utilisateurs ont évalué à un niveau élevé l'information de publication.

6. Le système de partage de l'information selon l'une quelconque des revendications 1 à 5, comprenant en outre une unité de modification de condition (44) modifiant la condition prédéterminée en fonction du nombre d'utilisateurs faisant partie du premier groupe.

7. Le système de partage de l'information selon la revendication 6, dans lequel le serveur (3) comprend l'unité de modification de condition (44).

8. Le système de partage de l'information selon l'une quelconque des revendications 1 à 7, comprenant en outre une unité de gestion de nombre (42) gérant pour chaque utilisateur le nombre de fois où chaque utilisateur peut exécuter une opération prédéterminée relative à l'information de publication.

9. Le système de partage de l'information selon la revendication 8, dans lequel l'unité de gestion de nombre (42) diminue le nombre de fois lorsqu'un utilisateur exécute l'opération prédéterminée et augmente le nombre de fois lorsqu'une condition d'augmentation prédéterminée est vérifiée après diminution du nombre de fois.

10. Le système de partage de l'information selon la revendication 9, dans lequel l'unité de gestion de nombre (42) augmente le nombre de fois en utilisant une condition basée sur le temps écoulé comme condition d'augmentation prédéterminée.

11. Le système de partage de l'information selon l'une quelconque des revendications 1 à 10, dans lequel le serveur (3) comprend en outre une seconde unité de distribution d'information de publication (43) distribuant l'information de publication, qui a été déterminée par l'unité de détermination d'information de publication (44) comme vérifiant une condition prédéterminée, vers un dispositif terminal (1) utilisé par un utilisateur faisant partie du second groupe.

12. Le système de partage de l'information selon l'une quelconque des revendications 1 à 11, dans lequel le nombre d'utilisateurs du second groupe est plus important que le nombre d'utilisateurs du premier groupe.

13. Le système de partage de l'information selon l'une quelconque des revendications 1 à 12, dans lequel le premier groupe et le second groupe sont présentés respectivement en tant que services différents.

14. Le système de partage de l'information selon la revendication 13, dans lequel le second groupe est un groupe d'utilisateurs qui utilise un service de mise en réseau social, et
le second groupe est un groupe d'utilisateurs qui utilise un service autre qu'un service de mise en réseau social.

15. Un serveur (3), qui permet le partage de l'information entre une pluralité d'utilisateurs, par l'intermédiaire de communications avec une pluralité de dispositifs terminaux (1) via un réseau, chaque dispositif terminal de la pluralité de dispositifs terminaux étant utilisé par un utilisateur de la pluralité d'utilisateurs, comprenant :
une unité de réception d'information de publication (43) recevant une information de publication émise depuis le dispositif terminal (1) ;
une unité de distribution d'information de publication (43) distribuant une information de publication, qui a été reçue par l'unité de réception d'information de publication (43), vers le dispositif terminal (1) utilisé par un utilisateur faisant partie d'un premier groupe ;
une unité de réception d'information d'opération (30) recevant une information sur une opération prédéterminée, qui a été acceptée par le dispositif terminal (1) pour information de publication distribuée par l'unité de distribution d'information de publication (43), en provenance du dispositif terminal (1) ; et
**caractérisé par** :
une unité de détermination d'information de publication (44) déterminant si l'information de publication relative à l'information d'opération reçue par l'unité de réception d'information d'opération (30) vérifie ou non une condition prédéterminée sur la base de l'information d'opération reçue par l'unité de réception d'information d'opération (30), et
dans lequel il devient possible de partager l'information de publication, qui a été déterminée par l'unité de détermination d'information de publication (44) comme vérifiant la condition prédéterminée, au niveau du dispositif terminal (1) utilisé par un utilisateur faisant partie d'un second groupe, qui est au moins partiellement différent du premier groupe,
dans lequel l'unité de détermination d'information de publication (44), sur la base de l'opération d'évaluation prédéterminée relative à l'information de publication par un utilisateur autre qu'un utilisateur qui a publié l'information de publication, détermine si l'information de publication vérifie ou non la condition prédéterminée.

16. Un programme de serveur capable de faire en sorte qu'un serveur (3) autorisant le partage d'information entre une pluralité d'utilisateurs, par l'intermédiaire de communications avec une pluralité de dispositifs terminaux (1) via un réseau, chaque dispositif terminal de la pluralité de dispositifs terminaux étant utilisés par l'un des utilisateurs de la pluralité d'utilisateurs, agisse comme :
un moyen de réception d'information de publication (43) pour recevoir une information de publication émise depuis le dispositif terminal (1) ;
un moyen de distribution d'information de publication (43) pour distribuer une information de publication, qui a été reçue par le moyen de réception d'information de publication (43), vers le dispositif terminal (1) utilisé par un utilisateur faisant partie d'un premier groupe ;
un moyen de réception d'information d'opération (30) pour recevoir une information sur une opération prédéterminée, qui a été acceptée par le dispositif terminal (1) pour information de publication distribuée par le moyen de distribution d'information de publication (43), en provenance du dispositif terminal (1) ; et
**caractérisé par** :
un moyen de détermination d'information de publication (44) pour déterminer si l'information de publication relative à l'information d'opération reçue par le moyen de réception d'information d'opération (30) vérifie ou non une condition prédéterminée sur la base de l'information d'opération reçue par l'unité de réception d'information d'opération (30), et
un moyen pour rendre possible le partage de l'information de publication, qui a été déterminée par le moyen de détermination d'information de publication (44) comme vérifiant la condition prédéterminée, au niveau du dispositif terminal (1) utilisé par un utilisateur faisant partie d'un second groupe, qui est au moins partiellement différent du premier groupe,
dans lequel le moyen de détermination d'information de publication (44), sur la base de l'opération d'évaluation prédéterminée relative à l'information de publication par un utilisateur autre qu'un utilisateur qui a publié l'information de publication, détermine si l'information de publication vérifie ou non la condition prédéterminée.

17. Un procédé de partage de l'information, qui autorise le partage de l'information entre une pluralité d'utilisateurs, par l'intermédiaire de communications entre un serveur (3) et une pluralité de dispositifs terminaux (1) via un réseau, chaque dispositif terminal de la pluralité de dispositifs terminaux étant utilisé par un utilisateur de la pluralité d'utilisateurs, comprenant :
une étape d'acceptation de publication (S3) pour l'acceptation du fait de publier en provenance d'un utilisateur par le dispositif terminal (1) ;
une étape d'émission d'information de publication (S4) pour l'émission d'une information de publication sur le fait de publier, qui a été accepté à l'étape d'acceptation de publication, vers le serveur (3) ;
une première étape de réception d'information de publication (S11) pour la réception de l'information de publication, qui a été émise à l'étape d'émission d'information de publication, par le serveur (3) ;
une étape de distribution d'information de publication (S14) pour la distribution de l'information de publication, qui a été reçue à la première étape de réception d'information de publication, vers le dispositif terminal (1) utilisé par un utilisateur faisant partie d'un premier groupe ;
une seconde étape de réception d'information de publication (S21) pour la réception de l'information de publication, qui a été distribuée à l'étape de distribution d'information de publication, par le dispositif terminal (1) ;
une étape de traitement d'affichage (S23, S28) pour l'exécution d'un traitement pour afficher l'information de publication, qui a été reçue à la seconde étape de réception de l'information de publication, sur une unité d'affichage (13) ;
une étape d'acceptation d'opération (S31) pour l'acceptation d'une opération d'évaluation prédéterminée de l'utilisateur relative à l'information de publication affichée à l'étape de traitement d'affichage ;
une étape d'émission d'information d'opération (S34) pour l'émission d'une information d'opération, qui a été acceptée à l'étape d'acceptation d'opération, vers le serveur (3) ;
une étape de réception d'information d'opération (S41) pour la réception d'une information d'opération, qui a été émise à l'étape d'émission d'information d'opération, par le serveur (3) ;
**caractérisé en ce que** le procédé comprend en outre :
une étape de détermination d'information de publication (S47) pour la détermination si l'information de publication relative à l'information d'opération reçue par les moyens de réception d'information d'opération (30) vérifie ou non une condition prédéterminée sur la base de l'information d'opération reçue à l'étape de réception d'information d'opération ; et
une étape pour rendre possible de partager l'information de publication (S48), qui a été déterminée à l'étape de détermination d'information de publication comme vérifiant les conditions prédéterminées, au niveau du dispositif terminal (1) utilisé par un utilisateur faisant partie d'un second groupe, qui est au moins partiellement différent du premier groupe,
dans lequel l'étape de détermination d'information de publication, sur la base de l'opération d'évaluation prédéterminée relative à l'information de publication par un utilisateur autre qu'un utilisateur qui a publié l'information de publication, est pour déterminer si l'information de publication vérifie ou non la condition prédéterminée.
